(19) Europäisches Patentamt / European Patent Office / Office européen des brevets

(11) **EP 3 745 520 A1**

(12) **EUROPEAN PATENT APPLICATION**
published in accordance with Art. 153(4) EPC


(43) Date of publication:
**02.12.2020 Bulletin 2020/49**

(21) Application number: **19744161.1**

(22) Date of filing: **24.01.2019**

(51) Int Cl.:
***H01M 10/0567*** *(2010.01)* ***H01M 10/052*** *(2010.01)*
***H01M 10/0568*** *(2010.01)*

(86) International application number:
**PCT/JP2019/002374**

(87) International publication number:
**WO 2019/146731 (01.08.2019 Gazette 2019/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.01.2018 JP 2018010350**
**25.01.2018 JP 2018010351**



(71) Applicant: **Mitsui Chemicals, Inc.**
**Minato-ku**
**Tokyo 105-7122 (JP)**

(72) Inventors:
- **SUGAWARA, Kei**
  **Sodegaura-shi, Chiba 299-0265 (JP)**
- **FUJIYAMA, Satoko**
  **Sodegaura-shi, Chiba 299-0265 (JP)**
- **ONISHI, Hitoshi**
  **Sodegaura-shi, Chiba 299-0265 (JP)**

(74) Representative: **J A Kemp LLP**
**14 South Square**
**Gray's Inn**
**London WC1R 5JJ (GB)**


(54) **NONAQUEOUS ELECTROLYTE SOLUTION FOR BATTERIES, AND LITHIUM SECONDARY BATTERY**


(57) A nonaqueous electrolytic solution for a battery, for use in a battery including an aluminum-containing positive electrode current collector, includes an electrolyte that includes a compound represented by the following Formula (1), and an additive A that is a fluorine-containing compound other than compounds represented by Formula (1). The concentration of the compound represented by Formula (1) is from 0.1 mol/L to 2.0 mol/L. In Formula (1), each of $R^1$ and $R^2$ independently represents a fluorine atom, a trifluoromethyl group, or a pentafluoroethyl group.

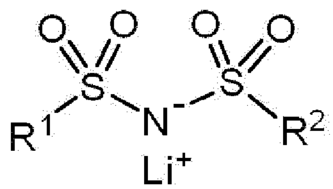

(1)


EP 3 745 520 A1

## Description

### Technical Field

The present disclosure relates to a nonaqueous electrolytic solution for a battery, and a lithium secondary battery.

### Background Art

In recent years, lithium secondary batteries are widely used as power sources for electronic devices, such as cellular phones and laptop computers, as well as for electric vehicles and electric power storage. In particular, needs for batteries that have high capacity, high power, and a high energy density, and that are mountable on hybrid vehicles and electric vehicles have rapidly been increasing.

A lithium secondary cell includes, for example, a positive electrode and a negative electrode that each contain a material capable of accepting and releasing lithium, and a nonaqueous electrolytic solution for a battery, the electrolytic solution containing a lithium salt as an electrolyte and a nonaqueous solvent.

In the nonaqueous electrolytic solution for a battery, $LiPF_6$ is often used as an electrolyte (lithium salt).

However, in recent years, studies have been conducted to use, as an electrolyte (lithium salt), a specific imide salt such as lithium bis(fluorosulfonyl)imide in addition to or in place of $LiPF_6$.

For example, Patent Document 1 discloses a nonaqueous electrolyte battery that may have improved safety and improved cycle characteristics at low temperatures, the nonaqueous electrolyte battery including a group of electrodes including a positive electrode and a negative electrode, and a nonaqueous electrolyte including an electrolytic solution, in which the group of electrodes include an insulating layer, the insulating layer contains a ceramic, the electrolytic solution contains an additive, such as vinylene carbonate, together with an imide salt such as lithium bis(fluorosulfonyl)imide, and the content of the imide salt is from 0.001 mol/L to 2.5 mol/L with respect to the electrolytic solution.

Further, Patent Document 2 discloses a battery that may have improved high-temperature characteristics, the battery including a positive electrode, a negative electrode and an electrolytic solution, in which the negative electrode contains a negative electrode active material containing at least one of silicon (Si) or tin (Sn) as a constituent element, and the electrolytic solution contains a solvent including 4-fluoro-1,3-dioxolane-2-one, and an imide salt represented by $LiN(C_nF_{2n}+iSO_2)_2$ (n representing an integer from 1 to 4).

Moreover, Patent Document 3 discloses a nonaqueous electrolytic solution for a secondary battery designed for obtaining favorable charged-state maintenance characteristics under a high-temperature environment, the electrolytic solution containing a fluorinated cyclic carbonic ester as a solvent and a lithium salt as an electrolyte, and containing lithium bisfluorosulfonylimide represented by a structural formula $(F\text{-}O_2S\text{-}N\text{-}SO_2\text{-}F)Li$ as the lithium salt.

Patent Document 1: Japanese Patent Application Laid-Open (JP-A) No. 2013-16456
Patent Document 2: Japanese Patent Application Laid-Open (JP-A) No. 2006-294375
Patent Document 3: Japanese Patent Application Laid-Open (JP-A) No. 2010-129449

## SUMMARY

### Technical Problem

However, in a battery that includes an aluminum-containing positive electrode current collector and a nonaqueous electrolytic solution containing a specific imide salt as an electrolyte, corrosion of the aluminum-containing positive electrode current collector may present a problem. This problem of corrosion of the aluminum-containing positive electrode current collector becomes more strongly manifested as the concentration of the specific imide salt in the nonaqueous electrolytic solution increases (for example, to 0.1 mol/L or higher).

Further, we have found that, in a battery that includes a nonaqueous electrolytic solution containing a specific imide salt as an electrolyte and an aluminum-containing positive electrode current collector, there are cases in which the battery resistance markedly increases during storage. The increase in the battery resistance during storage becomes more strongly manifested as the concentration of the specific imide salt in the nonaqueous electrolytic solution increases (for example, to 0.1 mol/L or higher). It is conceivable that one of the reasons for the increase in the battery resistance during storage may be corrosion of the aluminum-containing positive electrode current collector caused by the specific imide salt.

An object of a first aspect according to the present disclosure is provision of a nonaqueous electrolytic solution for a battery that contains a specific imide salt as an electrolytic solution, but is capable of reducing corrosion of an aluminum-containing positive electrode current collector, and provision of a lithium secondary battery including the

nonaqueous electrolytic solution for a battery.

An object of a second aspect according to the present disclosure is provision of a nonaqueous electrolytic solution for a battery that contains a specific imide salt as an electrolytic solution, but is capable of curbing an increase in the battery resistance during storage, and provision of a lithium secondary battery including the nonaqueous electrolytic solution for a battery.

Technical Solution

Means for achieving the object of the first aspect includes the following <1> to <10> as well as portions of <20> and <21> that refer to <1> to <10>.

Means for achieving the object of the second aspect includes the following <11> to <19> as well as portions of <20> and <21> that refer to <11> to <19>.

<1> A nonaqueous electrolytic solution for a battery, for use in a battery including an aluminum-containing positive electrode current collector, the nonaqueous electrolytic solution including:

an electrolyte that includes a compound represented by the following Formula (1); and
an additive A that is a fluorine-containing compound other than compounds represented by Formula (1),
the concentration of the compound represented by Formula (1) being from 0.1 mol/L to 2.0 mol/L:

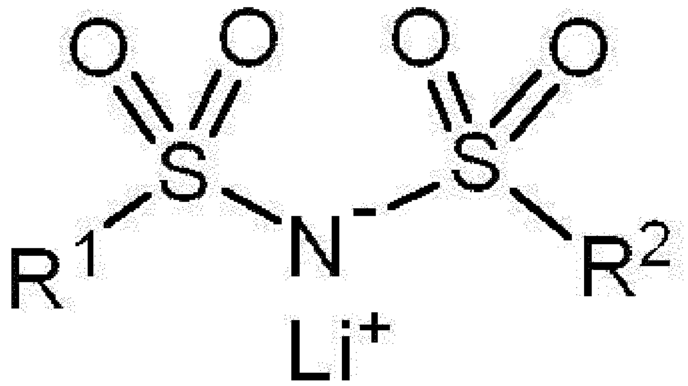

(1)

wherein, in Formula (1), each of $R^1$ and $R^2$ independently represents a fluorine atom, a trifluoromethyl group, or a pentafluoroethyl group.

<2> The nonaqueous electrolytic solution for a battery according to <1>, wherein, in Formula (1), each of $R^1$ and $R^2$ independently represents a fluorine atom or a trifluoromethyl group.
<3> The nonaqueous electrolytic solution for a battery according to <1> or <2>, wherein the electrolyte further includes $LiPF_6$, and the ratio of the number of moles of the compound represented by Formula (1) with respect to the total of the number of moles of the compound represented by Formula (1) and the number of moles of $LiPF_6$ is from 0.08 to 0.9.
<4> The nonaqueous electrolytic solution for a battery according to <3>, wherein the ratio of the number of moles of the compound represented by Formula (1) with respect to the total of the number of moles of the compound represented by Formula (1) and the number of moles of $LiPF_6$ is from 0.1 to 0.9.
<5> The nonaqueous electrolytic solution for a battery according to any one of <1> to <4>, wherein the additive A includes at least one selected from the group consisting of a compound represented by the following Formula (A1), a compound represented by the following Formula (A2), and a compound represented by the following Formula (A3):

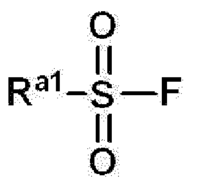 (A1) 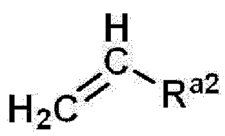 (A2) 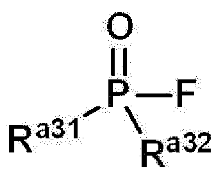 (A3)

wherein, in Formula (A1), $R^{a1}$ represents a hydrocarbon group having from 1 to 6 carbon atoms, a hydrocarbon group having from 1 to 6 carbon atoms which is substituted with at least one fluorine atom, a hydrocarbonoxy group having from 1 to 6 carbon atoms, a hydrocarbonoxy group having from 1 to 6 carbon atoms which is substituted with at least one fluorine atom, a fluorine atom, or an -OLi group;
in Formula (A2), $R^{a2}$ represents a hydrocarbon group having from 1 to 12 carbon atoms which is substituted with at least one fluorine atom; and
in Formula (A3), one of $R^{a31}$ or $R^{a32}$ represents a fluorine atom or an -OLi group, and another of $R^{a31}$ or $R^{a32}$ represents an -OLi group.

<6> The nonaqueous electrolytic solution for a battery according to <5>, wherein $R^{a1}$ is a hydrocarbon group having from 1 to 6 carbon atoms, a hydrocarbon group having from 1 to 6 carbon atoms which is substituted with at least one fluorine atom, a hydrocarbonoxy group having from 1 to 6 carbon atoms, a hydrocarbonoxy group having from 1 to 6 carbon atoms which is substituted with at least one fluorine atom, or a fluorine atom.
<7> The nonaqueous electrolytic solution for a battery according to <5> or <6>, wherein the additive A includes at least one selected from the group consisting of a compound represented by Formula (A1) and a compound represented by Formula (A2).
<8> The nonaqueous electrolytic solution for a battery according to <5> or <6>, wherein the nonaqueous electrolytic solution contains:

a combination of the electrolyte and the additive A, wherein the electrolyte includes lithium bis(trifluoromethylsulfonyl)imide as the compound represented by Formula (1), and the additive A includes at least one selected from the group consisting of a compound represented by Formula (A1) and a compound represented by Formula (A3), or
a combination of the electrolyte and the additive A, wherein the electrolyte includes lithium bis(fluorosulfonyl)imide as the compound represented by Formula (1), and the additive A includes at least one selected from the group consisting of a compound represented by Formula (A1) and a compound represented by Formula (A2).

<9> The nonaqueous electrolytic solution for a battery according to any one of <1> to <8>, wherein the content of the additive A is from 0.1% by mass to 10% by mass with respect to the total amount of the nonaqueous electrolytic solution for a battery.
<10> The nonaqueous electrolytic solution for a battery according to <9>, wherein the content of the additive A is from 0.2% by mass to 10% by mass with respect to the total amount of the nonaqueous electrolytic solution for a battery.
<11> A nonaqueous electrolytic solution for a battery, for use in a battery including an aluminum-containing positive electrode current collector, the nonaqueous electrolytic solution including:

an electrolyte that includes a compound represented by the following Formula (1); and
a nonaqueous solvent including at least one fluorine-containing compound selected from the group consisting of a fluorine-containing carbonate compound and a fluorine-containing ether compound,
the concentration of the compound represented by Formula (1) being from 0.1 mol/L to 2.0 mol/L:

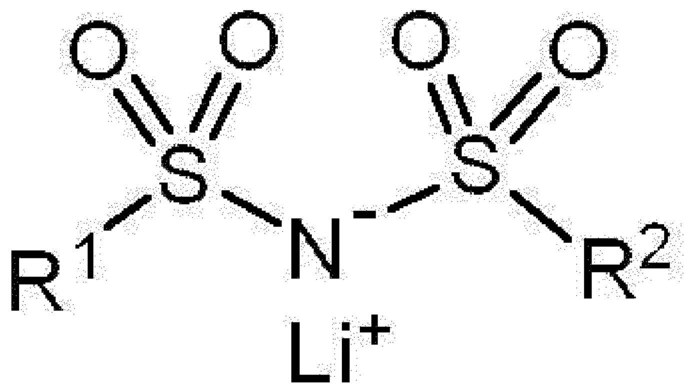

(1)

wherein, in Formula (1), each of $R^1$ and $R^2$ independently represents a fluorine atom, a trifluoromethyl group, or a pentafluoroethyl group.

<12> The nonaqueous electrolytic solution for a battery according to <11>, wherein, in Formula (1), each of $R^1$ and $R^2$ independently represents a fluorine atom or a trifluoromethyl group.

<13> The nonaqueous electrolytic solution for a battery according to <11> or <12>,
wherein the electrolyte further includes $LiPF_6$, and the ratio of the number of moles of the compound represented by Formula (1) with respect to the total of the number of moles of the compound represented by Formula (1) and the number of moles of $LiPF_6$ is from more than 0.1 to 0.9.

<14> The nonaqueous electrolytic solution for a battery according to any one of <11> to <13>, wherein the fluorine-containing compound includes at least one selected from the group consisting of a compound represented by the following Formula (F1), a compound represented by the following Formula (F2), and a compound represented by the following Formula (F3):

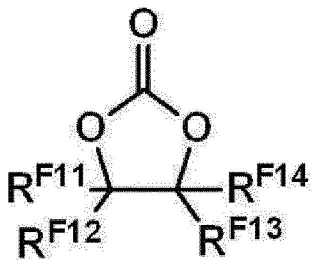

(F1)

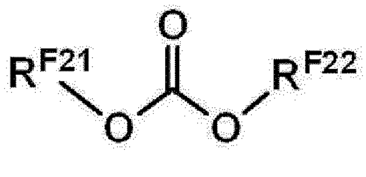

(F2)

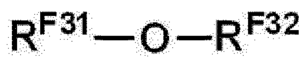

(F3)

wherein, in Formula (F1), $R^{F11}$ represents a fluorine atom or a fluorinated hydrocarbon group having from 1 to 6 carbon atoms, and each of $R^{F12}$ to $R^{F14}$ independently represents a hydrogen atom, a fluorine atom, a hydrocarbon group having from 1 to 6 carbon atoms, or a fluorinated hydrocarbon group having from 1 to 6 carbon atoms;
in Formula (F2), $R^{F21}$ represents a fluorinated hydrocarbon group having from 1 to 6 carbon atoms, and $R^{F22}$ represents a hydrocarbon group having from 1 to 6 carbon atoms, or a fluorinated hydrocarbon group having from 1 to 6 carbon atoms; and
in Formula (F3), $R^{F31}$ represents a fluorinated hydrocarbon group having from 1 to 6 carbon atoms, $R^{F32}$ represents a hydrocarbon group having from 1 to 6 carbon atoms, or a fluorinated hydrocarbon group having from 1 to 6 carbon atoms, and $R^{F31}$ and $R^{F32}$ are optionally bound to each other to form a ring.

<15> The nonaqueous electrolytic solution for a battery according to <14>, wherein the fluorine-containing compound includes at least one selected from the group consisting of a compound represented by Formula (F2) and a compound represented by Formula (F3).

<16> The nonaqueous electrolytic solution for a battery according to <14>, wherein the fluorine-containing compound includes at least one selected from the group consisting of compounds represented by Formula (F3).

<17> The nonaqueous electrolytic solution for a battery according to any one of <11> to <16>, wherein the proportion of the fluorine-containing compound to the nonaqueous solvent is 40% by mass or lower.

<18> The nonaqueous electrolytic solution for a battery according to any one of <11> to <17>, wherein the proportion of the fluorine-containing compound to the nonaqueous solvent is 10% by mass or higher.

<19> The nonaqueous electrolytic solution for a battery according to <18>, wherein the proportion of the fluorine-containing compound to the nonaqueous solvent is higher than 20% by mass.

<20> A lithium secondary battery, including:

a positive electrode that includes an aluminum-containing positive electrode current collector;
a negative electrode that includes, as a negative electrode active material, at least one selected from the group consisting of metallic lithium, a lithium-containing alloy, a metal or alloy capable of being alloyed with lithium, an oxide capable of doping and dedoping of lithium ions, a transition metal nitride capable of doping and dedoping of lithium ions, and a carbon material capable of doping and dedoping of lithium ions; and
the nonaqueous electrolytic solution for a battery according to any one of <1> to <19>.

<21> A lithium secondary battery obtained by charging and discharging the lithium secondary battery according to <20>.

## Advantageous Effects of Invention

According to the first aspect of the present disclosure, a nonaqueous electrolytic solution for a battery that contains a specific imide salt as an electrolytic solution, but is capable of reducing corrosion of an aluminum-containing positive electrode current collector, and a lithium secondary battery including the nonaqueous electrolytic solution for a battery, are provided.
According to the second aspect of the present disclosure, a nonaqueous electrolytic solution for a battery that contains a specific imide salt as an electrolytic solution, but is capable of curbing an increase in the battery resistance during storage, and a lithium secondary battery including the nonaqueous electrolytic solution for a battery, are provided.

## BRIEF DESCRIPTION OF DRAWINGS

FIG. 1 is a schematic perspective view illustrating an example of a laminate battery, which is one example of a lithium secondary battery according to the present disclosure.
FIG. 2 is a schematic cross-sectional view of stacked electrode housed in the laminate battery illustrated in FIG. 1, taken along the thickness direction.
FIG. 3 is a schematic cross-sectional view illustrating an example of a coin battery, which is another example of a lithium secondary battery according to the present disclosure.
FIG. 4 shows cyclic voltammograms of a second cycle of cyclic voltammetry performed in Example 1A, Example 2A, and Comparative Example 1A.
FIG. 5 shows cyclic voltammograms of a second cycle of cyclic voltammetry performed in Example 101A, Example 102A, and Comparative Example 101A.
FIG. 6 shows cyclic voltammograms of a second cycle of cyclic voltammetry performed for nonaqueous electrolytic solutions of Examples 1B to 3B and Comparative Example 1B.
FIG. 7 shows cyclic voltammograms of a second cycle of cyclic voltammetry performed for nonaqueous electrolytic solutions of Example 101B and Comparative Example 101B.

## MODES FOR CARRYING OUT INVENTION

In the present specification, any numerical range expressed using "to" refers to a range that includes the values indicated before and after "to" as the minimum and maximum values, respectively.
In a case in which plural substances corresponding to a component of interest are present in a composition, the amount of the component in the composition described in the present specification means the total amount of the plural substances present in the composition, unless otherwise specified.
In a series of numerical ranges described in the present disclosure, the upper or lower limit value of one numerical range may be replaced by the upper or lower limit value of another numerical range in the series of numerical ranges, or may be replaced by a value described in working examples.
A first aspect of the present disclosure and and a second aspect of the present disclosure are described below.

### [Nonaqueous Electrolytic solution for Battery According to First Aspect]

The nonaqueous electrolytic solution for a battery (hereinafter, also simply referred to as "nonaqueous electrolytic solution") according to the first aspect of the present disclosure is a nonaqueous electrolytic solution for a battery, for use in a battery including an aluminum-containing positive electrode current collector, the nonaqueous electrolytic solution including:

an electrolyte that includes a compound represented by the following Formula (1); and
an additive A that is a fluorine-containing compound other than compounds represented by Formula (1),
the concentration of the compound represented by Formula (1) being from 0.1 mol/L to 2.0 mol/L.

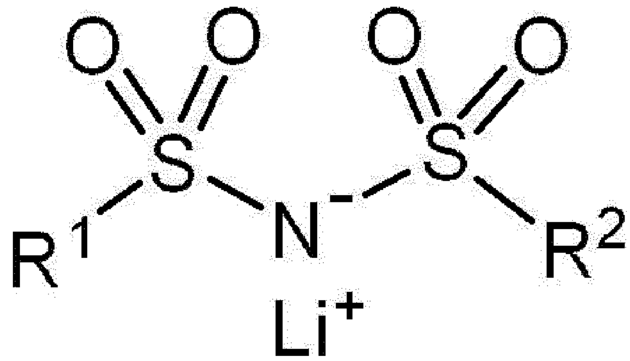

(1)

In Formula (1), each of $R^1$ and $R^2$ independently represents a fluorine atom, a trifluoromethyl group, or a pentafluoroethyl group.

In a battery that includes an aluminum-containing positive electrode current collector and a nonaqueous electrolytic solution containing the compound represented by Formula (1) as an electrolyte, corrosion of the aluminum-containing positive electrode current collector (hereinafter, also referred to as "Al corrosion") may present a problem. The Al corrosion problem becomes more strongly manifested as the concentration of a specific imide salt in the nonaqueous electrolytic solution increases (for example, to 0.1 mol/L or higher).

In this respect, the nonaqueous electrolytic solution of the first aspect contains the additive A, which is a fluorine-containing compound other than compounds represented by Formula (1), and, due to this configuration, the nonaqueous electrolytic solution is capable of reducing Al corrosion even though nonaqueous electrolytic solution is a nonaqueous electrolytic solution containing a compound represented by Formula (1) as an electrolyte.

It is conceivable that the reason therefor is that, due to the inclusion of the additive A in the nonaqueous electrolytic solution, a passivation film mainly composed of $AlF_3$ is formed on a surface of the aluminum-containing positive electrode current collector.

The nonaqueous electrolytic solution of the first aspect is expected to have an effect in terms of improving the battery performance (for example, an effect in terms of curbing an increase in the battery resistance during storage), in association with the above-described effect in terms of reducing Al corrosion.

<Compound Represented by Formula (1)>

The electrolyte in the nonaqueous electrolytic solution of the first aspect includes at least one compound represented by Formula (1).

The compound represented by Formula (1) (specifically, the compound in which each of $R^1$ and $R^2$ in Formula (1) independently represents a fluorine atom, a trifluoromethyl group, or a pentafluoroethyl group) has a higher tendency to cause Al corrosion than that of compounds in which at least one of $R^1$ or $R^2$ in Formula (1) is a fluoroalkyl group having 3 or more carbon atoms.

In the nonaqueous electrolytic solution of the first aspect, the Al corrosion problem is solved by incorporating the additive A into the nonaqueous electrolytic solution.

It is preferable that each of $R^1$ and $R^2$ in Formula (1) is independently a fluorine atom or a trifluoromethyl group.

When each of $R^1$ and $R^2$ in Formula (1) is independently a fluorine atom or a trifluoromethyl group, the Al corrosion problem caused by the compound represented by Formula (1) tends to be more strongly manifested.

Therefore, when each of $R^1$ and $R^2$ in Formula (1) is independently a fluorine atom or a trifluoromethyl group, the effect exerted by the addition of the additive A in terms of reducing Al corrosion is more remarkable (in other words, the degree of alleviation of Al corrosion is larger).

Examples of the compound represented by Formula (1) include lithium bis(fluorosulfonyl)imide, lithium bis(trifluoromethylsulfonyl)imide, and lithium bis(pentafluoroethylsulfonyl)imide.

Lithium bis(fluorosulfonyl)imide (abbreviated as "LiFSI") is a compound that is represented by Formula (1) and in which both of $R^1$ and $R^2$ are fluorine atoms.

Lithium bis(trifluoromethylsulfonyl)imide (abbreviated as "LiTFSI") is a compound that is represented by Formula (1) and in which both of $R^1$ and $R^2$ are trifluoromethyl groups. Lithium bis(trifluoromethylsulfonyl)imide may also be referred to as "lithium bis(trifluoromethanesulfonyl)imide" .

Lithium bis(pentafluoroethylsulfonyl)imide is a compound that is represented by Formula (1) and in which both of $R^1$ and $R^2$ are pentafluoroethyl groups.

In the nonaqueous electrolytic solution of the first aspect, the concentration of the compound represented by Formula (1) is from 0.1 mol/L to 2.0 mol/L.

In general, the Al corrosion problem is more strongly manifested when the concentration of the compound represented by Formula (1) is 0.1 mol/L or higher.

However, the nonaqueous electrolytic solution of the first aspect is capable of reducing Al corrosion even though the concentration of the compound represented by Formula (1) is 0.1 mol/L or higher, owing to the inclusion of the additive A, which is a fluorine-containing compound other than compounds represented by Formula (1), in the nonaqueous electrolytic solution. In other words, in the nonaqueous electrolytic solution of the first aspect, the effect produced by adding the additive A is more remarkable (in other words, the degree of allevation of Al corrosion as compared to Al corrosion generated in a case in which a nonaqueous electrolytic solution does not contain the additive A being greater) due to the concentration of the compound represented by Formula (1) being 0.1 mol/L or higher.

The concentration of the compound represented by Formula (1) may be 0.15 mol/L or higher, or may be 0.2 mol/L or higher, or may be 0.3 mol/L or higher, or may be 0.4 mol/L or higher.

Further, in the nonaqueous electrolytic solution of the first aspect, Al corrosion itself caused by the compound represented by Formula (1) is reduced due to the concentration of the compound represented by Formula (1) being regulated to be 2.0 mol/L or lower, .

The concentration of the compound represented by Formula (1) may be 1.5 mol/L or lower, or may be 1.0 mol/L or lower.

<Other Electrolyte>

The electrolyte in the nonaqueous electrolytic solution of the first aspect may include at least one electrolyte other than compounds represented by Formula (1).

Another electrolyte that can be used may be any electrolyte that is usually used as an electrolyte for a nonaqueous electrolytic solution.

Specific examples of another electrolyte include: tetraalkyl ammonium salts such as $(C_2H_5)_4NPF_6$, $(C_2H_5)_4NBF_4$, $(C_2H_5)_4NC10_4$, $(C_2H_5)_4NAsF_6$, $(C_2H_5)_4N_2SiF_6$, $(C_2H_5)_4NOSO_2C_kF_{(2k+1)}$ (k representing an integer from 1 to 8), and $(C_2H_5)_4NPF_n[C_kF_{(2k+1)}]_{(6-n)}$ (n being from 1 to 5, and k representing an integer from 1 to 8); and lithium salts such as $LiPF_6$, $LiBF_4$, $LiClO_4$, $LiAsF_6$, $Li_2SiF_6$, $LiOSO_2C_kF_{(2k+1)}$ (k representing an integer from 1 to 8), and $LiPF_n[C_kF_{(2k+1)}]_{(6-n)}$ (n being from 1 to 5, and k representing an integer from 1 to 8). Lithium salts represented by the following Formulae are also usable.

$LiC(SO_2R^7)(SO_2R^8)(SO_2R^9)$, $LiN(SO_2OR^{10})(SO_2OR^{11})$ (wherein, $R^7$ to $R^{11}$ may be the same as or different from one another, and each represent a perfluoroalkyl group having from 2 to 8 carbon atoms), $LiN(SO_2R^{12})(SO_2R^{13})$ (wherein, $R^{12}$ and $R^{13}$ may be the same as or different from each other, and each represent a perfluoroalkyl group having from 3 to 8 carbon atoms)

These electrolytes may be used singly, or two or more electrolytes may be mixed.

Among these electrolytes, lithium salts are particularly favorable. Further, $LiPF_6$, $LiBF_4$, $LiOSO_2C_kF_{(2k+1)}$ (k representing an integer from 1 to 8), $LiClO_4$, $LiAsF_6$, $LiNSO_2[C_kF_{(2k+1)}]_2$ (k representing an integer from 1 to 8), and $LiPF_n[C_kF_{(2k+1)}]_{(6-n)}$ (n being from 1 to 5, and k representing an integer from 1 to 8) are preferable, and $LiPF_6$ is particularly preferable.

An embodiment in which the electrolyte in the nonaqueous electrolytic solution of the first aspect includes $LiPF_6$ as another electrolyte is advantageous in terms of, for example, electrical conductivity and oxidation resistance.

The concentration of another electrolyte is preferably from 0.1 mol/L to 2.0 mol/L.

In this case, the concentration of another electrolyte may be 0.2 mol/L or higher, or may be 0.3 mol/L or higher, or may be 0.4 mol/L or higher, or may be 0.5 mol/L or higher.

The concentration of another electrolyte may be 1.5 mol/L or lower, or may be 1.0 mol/L or lower.

When another electrolyte is $LiPF_6$, the concentration of $LiPF_6$ is preferably from 0.1 mol/L to 2.0 mol/L.

In this case, the concentration of $LiPF_6$ may be 0.2 mol/L or higher, or may be 0.3 mol/L or higher, or may be 0.4 mol/L or higher, or may be 0.5 mol/L or higher.

The concentration of $LiPF_6$ may be 1.5 mol/L or lower, or may be 1.0 mol/L or lower.

A particularly preferable embodiment of the nonaqueous electrolytic solution of the first aspect is an embodiment in which the electrolyte further includes $LiPF_6$, and in which the ratio of the number of moles of the compound represented by Formula (1) to the total of the number of moles of the compound represented by Formula (1) and the number of moles of $LiPF_6$ (hereinafter also referred to as "molar ratio [Compound represented by Formula (1)/(Compound represented by Formula (1) + $LiPF_6$)]") is from 0.08 to 0.9.

In general, when the molar ratio [Compound represented by Formula (1)/(Compound represented by Formula (1) + $LiPF_6$)] is 0.08 or higher, Al corrosion tends to be more prominent.

However, the nonaqueous electrolytic solution of the first aspect is capable of reducing Al corrosion even when the molar ratio [Compound represented by Formula (1)/(Compound represented by Formula (1) + $LiPF_6$)] is 0.08 or higher, due to the inclusion of the additive A. In other words, when the molar ratio [Compound represented by Formula

(1)/(Compound represented by Formula (1) + $LiPF_6$)] is 0.08 or higher, the effect produced by the addition of the additive A is more remarkable (in other words, the degree of alleviation of Al corrosion as compared to Al corrosion generated in a case in which a nonaqueous electrolytic solution does not contain the additive A is greater).

Meanwhile, a molar ratio [Compound represented by Formula (1)/(Compound represented by Formula (1) + $LiPF_6$)] of 0.9 or lower is advantageous in terms of, for example, electrical conductivity and oxidation resistance.

The molar ratio [Compound represented by Formula (1)/(Compound represented by Formula (1) + $LiPF_6$)] is more preferably from 0.1 to 0.9, still more preferably from 0.15 to 0.8, further preferably from 0.2 to 0.8, and still further preferably from 0.3 to 0.7.

<Additive A>

The nonaqueous electrolytic solution of the first aspect contains at least one additive A that is a fluorine-containing compound other than compounds represented by Formula (1).

The additive A may be any compound that contains a fluorine atom, and is not particularly restricted.

The additive A is preferably a compound having a molecular weight of 1,000 or less, and more preferably a compound having a molecular weight of 500 or less.

From the standpoint of the effect in terms of reducing Al corrosion, the additive A is preferably at least one selected from the group consisting of a compound represented by Formula (A1) illustrated below, a compound represented by Formula (A2) illustrated below, and a compound represented by Formula (A3) illustrated below.

The additive A may be at least one selected from the group consisting of a compound represented by Formula (A1) illustrated below and a compound represented by Formula (A2) illustrated below.

The content of the additive A is preferably from 0.001% by mass to 10% by mass, more preferably from 0.01% by mass to 10% by mass, still more preferably from 0.1% by mass to 10% by mass, still more preferably from 0.2% by mass to 10% by mass, still more preferably from 0.5% by mass to 5% by mass, still more preferably from 0.5% by mass to 3% by mass, still more preferably from 0.6% by mass to 2% by mass, still more preferably from 0.7% by mass to 1.5% by mass, with respect to the total amount of the nonaqueous electrolytic solution.

(Compound Represented by Formula (A1))

The compound represented by Formula (A1) is shown below.

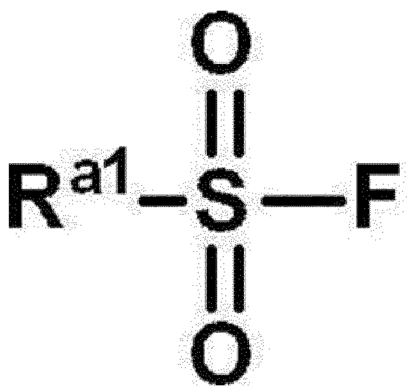

(A1)

In Formula (A1), $R^{a1}$ represents a hydrocarbon group having from 1 to 6 carbon atoms, a hydrocarbon group having from 1 to 6 carbon atoms which is substituted with at least one fluorine atom, a hydrocarbonoxy group having from 1 to 6 carbon atoms, a hydrocarbonoxy group having from 1 to 6 carbon atoms which is substituted with at least one fluorine atom, a fluorine atom, or a -OLi group.

In Formula (A1), the "hydrocarbon group having from 1 to 6 carbon atoms" represented by $R^{a1}$ refers to an unsubstituted hydrocarbon group having from 1 to 6 carbon atoms.

The "hydrocarbon group having from 1 to 6 carbon atoms" represented by $R^{a1}$ may be a linear hydrocarbon group, a branched hydrocarbon group, or a cyclic hydrocarbon group.

The "hydrocarbon group having from 1 to 6 carbon atoms" represented by $R^{a1}$ is preferably an alkyl group or an alkenyl group, and more preferably an alkyl group.

The number of carbon atoms of the "hydrocarbon group having from 1 to 6 carbon atoms" represented by $R^{a1}$ is preferably from 1 to 3, more preferably 1 or 2, and particularly preferably 1.

Examples of the "hydrocarbon group having from 1 to 6 carbon atoms" represented by $R^{a1}$ include: alkyl groups,

such as a methyl group, an ethyl group, an *n*-propyl group, an isopropyl group, a 1-ethylpropyl group, an *n*-butyl group, an isobutyl group, a *sec*-butyl group, a *tert*-butyl group, a 2-methylbutyl group, a 3,3-dimethylbutyl group, an *n*-pentyl group, an isopentyl group, a neopentyl group, a 1-methylpentyl group, an *n*-hexyl group, an isohexyl group, a *sec*-hexyl group, and a *tert*-hexyl group; and alkenyl groups, such as a vinyl group, a 1-propenyl group, an allyl group, a 1-butenyl group, a 2-butenyl group, a 3-butenyl group, a pentenyl group, a hexenyl group, an isopropenyl group, a 2-methyl-2-propenyl group, a 1-methyl-2-propenyl group, and a 2-methyl-1-propenyl group.

Examples of the "hydrocarbon group having from 1 to 6 carbon atoms which is substituted with at least one fluorine atom" represented by $R^{a1}$ is, for example, a group having a structure in which the above-described "hydrocarbon group having from 1 to 6 carbon atoms" represented by $R^1$ (specifically, an unsubstituted hydrocarbon group having from 1 to 6 carbon atoms) is substituted with at least one fluorine atom.

Examples of the "hydrocarbon group having from 1 to 6 carbon atoms which is substituted with at least one fluorine atom" represented by $R^{a1}$ include: fluoroalkyl groups, such as a fluoromethyl group, a difluoromethyl group, a trifluoromethyl group, a 2,2,2-trifluoroethyl group, a perfluoroethyl group, a perfluoropropyl group, a perfluorobutyl group, a perfluoropentyl group, a perfluorohexyl group, a perfluoroisopropyl group, and a perfluoroisobutyl group; and fluoroalkenyl groups, such as a 2-fluoroethenyl group, a 2,2-difluoroethenyl group, a 2-fluoro-2-propenyl group, a 3,3-difluoro-2-propenyl group, a 2,3-difluoro-2-propenyl group, a 3,3-difluoro-2-methyl-2-propenyl group, a 3-fluoro-2-butenyl group, a perfluorovinyl group, a perfluoropropenyl group, and a perfluorobutenyl group.

In Formula (A1), the hydrocarbon group moiety in the structure of the "hydrocarbonoxy group having from 1 to 6 carbon atoms" represented by $R^{a1}$ has the same meaning as that of the above-described "hydrocarbon group having from 1 to 6 carbon atoms" represented by $R^{a1}$.

The "hydrocarbonoxy group having from 1 to 6 carbon atoms" represented by $R^{a1}$ is preferably an alkoxy group or an alkenyloxy group, and more preferably an alkoxy group.

Examples of the "hydrocarbonoxy group having from 1 to 6 carbon atoms" represented by $R^{a1}$ include: alkoxy groups, such as a methoxy group, an ethoxy group, a propoxy group, an isopropoxy group, an *n*-butoxy group, a 2-butoxy group, a *tert*-butoxy group, a cyclopropyloxy group, and a cyclopentyloxy group; and alkenyloxy groups, such as an allyloxy group and a vinyloxy group.

In Formula (A1), the "hydrocarbonoxy group having from 1 to 6 carbon atoms which is substituted with at least one fluorine atom" represented by $R^{a1}$ is, for example, a group having a structure in which the above-described "hydrocarbonoxy group having from 1 to 6 carbon atoms" represented by $R^1$ (specifically, an unsubstituted hydrocarbonoxy group having from 1 to 6 carbon atoms) is substituted with at least one fluorine atom.

In Formula (A1), $R^{a1}$ is preferably a hydrocarbon group having from 1 to 6 carbon atoms (specifically, an unsubstituted hydrocarbon group having from 1 to 6 carbon atoms), a hydrocarbon group having from 1 to 6 carbon atoms which is substituted with at least one fluorine atom, a hydrocarbonoxy group having from 1 to 6 carbon atoms, a hydrocarbonoxy group having from 1 to 6 carbon atoms which is substituted with at least one fluorine atom, or a fluorine atom. $R^{a1}$ is more preferably a hydrocarbon group having from 1 to 6 carbon atoms, or a hydrocarbon group having from 1 to 6 carbon atoms which is substituted with at least one fluorine atom. $R^{a1}$ is still more preferably a hydrocarbon group having from 1 to 6 carbon atoms, and particularly preferably an alkyl group having from 1 to 6 carbon atoms.

The compound represented by Formula (A1) is preferably methanesulfonyl fluoride (abbreviated as "MSF), ethanesulfonyl fluoride, propanesulfonyl fluoride, 2-propanesulfonyl fluoride, butanesulfonyl fluoride, 2-butanesulfonyl fluoride, hexanesulfonyl fluoride, trifluoromethanesulfonyl fluoride, perfluoroethanesulfonyl fluoride, perfluoropropanesulfonyl fluoride, perfluorobutanesulfonyl fluoride, ethenesulfonyl fluoride, 1-propene-1-sulfonyl fluoride, or 2-propene-1-sulfonyl fluoride. The compound represented by Formula (A1) is more preferably methanesulfonyl fluoride, ethanesulfonyl fluoride, propanesulfonyl fluoride, 2-propanesulfonyl fluoride, butanesulfonyl fluoride, 2-butanesulfonyl fluoride, hexanesulfonyl fluoride, trifluoromethanesulfonyl fluoride, perfluoroethanesulfonyl fluoride, perfluoropropanesulfonyl fluoride, or perfluorobutanesulfonyl fluoride. The compound represented by Formula (A1) is still more preferably methanesulfonyl fluoride, ethanesulfonyl fluoride, propanesulfonyl fluoride, 2-propanesulfonyl fluoride, butanesulfonyl fluoride, 2-butanesulfonyl fluoride, or hexanesulfonyl fluoride. The compound represented by Formula (A1) is further more preferably methanesulfonyl fluoride, ethanesulfonyl fluoride, or propanesulfonyl fluoride, and particularly preferably methanesulfonyl fluoride.

Methanesulfonyl fluoride (abbreviated as "MSF) is a compound represented by Formula (A1) in which $R^{a1}$ is a methyl group.

(Compound Represented by Formula (A2))

The compound represented by Formula (A2) is shown below.

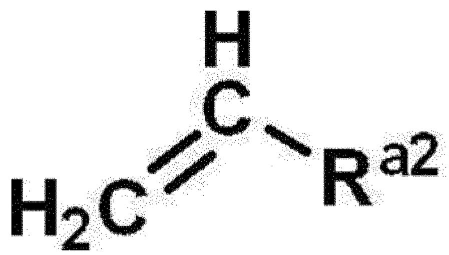

(A2)

In Formula (A2), $R^{a2}$ represents a hydrocarbon group having from 1 to 12 carbon atoms which is substituted with at least one fluorine atom.

The hydrocarbon group represented by $R^{a2}$ may be a linear hydrocarbon group, a branched hydrocarbon group, or a cyclic hydrocarbon group.

With regard to the hydrocarbon group represented by $R^{a2}$, a hydrocarbon group having from 1 to 12 carbon atoms that is to be substituted with at least one fluorine atom (specifically, an unsubstituted hydrocarbon group having from 1 to 12 carbon atoms) is preferably an alkyl group or an alkenyl group, and more preferably an alkyl group.

The hydrocarbon group represented by $R^{a2}$ may be any hydrocarbon group that is substituted with at least one fluorine atom. The hydrocarbon group represented by $R^{a2}$ is preferably a perfluorohydrocarbon group, and more preferably a perfluoroalkyl group.

The number of carbon atoms of the hydrocarbon group represented by $R^{a2}$ is preferably from 3 to 10, more preferably from 4 to 10, still more preferably 4 or 6, and particularly preferably 6.

A compound that is represented by Formula (A2) and in which $R^{a2}$ is a perfluoroalkyl group having 6 carbon atoms is perfluorohexylethylene (abbreviated as "PFHE).

In the "hydrocarbon group having from 1 to 12 carbon atoms which is substituted with at least one fluorine atom" represented by $R^{a2}$, examples of the "hydrocarbon group having from 1 to 12 carbon atoms" to be substituted with at least one fluorine atom (specifically, an unsubstituted hydrocarbon group having from 1 to 12 carbon atoms) include: alkyl groups, such as a methyl group, an ethyl group, an *n*-propyl group, an isopropyl group, a 1-ethylpropyl group, an *n*-butyl group, an isobutyl group, a *sec*-butyl group, a *tert*-butyl group, a 2-methylbutyl group, a 3,3-dimethylbutyl group, an *n*-pentyl group, an isopentyl group, a neopentyl group, a 1-methylpentyl group, an *n*-hexyl group, an isohexyl group, a *sec*-hexyl group, a *tert*-hexyl group, an *n*-heptyl group, an isoheptyl group, a *sec*-heptyl group, a *tert*-heptyl group, an *n*-octyl group, an isooctyl group, a *sec*-octyl group, and a *tert*-octyl group; and alkenyl groups, such as a vinyl group, a 1-propenyl group, an allyl group, a 1-butenyl group, a 2-butenyl group, a 3-butenyl group, a pentenyl group, a hexenyl group, an isopropenyl group, a 2-methyl-2-propenyl group, a 1-methyl-2-propenyl group, a 2-methyl-1-propenyl group, and an octamethylene group.

(Compound Represented by Formula (A3))

The compound represented by Formula (A3) is shown below.

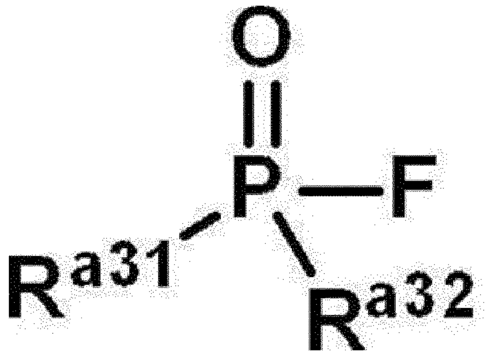

(A3)

In Formula (A3), one of $R^{a31}$ or $R^{a32}$ represents a fluorine atom or a -OLi group, and the other one of $R^{a31}$ or $R^{a32}$ represents a -OLi group.

Examples of the compound represented by Formula (A3) include lithium monofluorophosphate and lithium difluorophosphate (abbreviated as "LiDFP), and lithium difluorophosphate (abbreviated as "LiDFP) is particularly preferable.

Lithium monofluorophosphate is a compound that is represented by Formula (A3) and in which both of $R^{a31}$ and $R^{a32}$ are -OLi groups.
Lithium difluorophosphate (abbreviated as "LiDFP) is a compound that is represented by Formula (A3), and in which one of $R^{a31}$ or $R^{a32}$ is a fluorine atom and the other one of $R^{a31}$ or $R^{a32}$ is a -OLi group.

(Other Fluorine-Containing Compound)

Examples of the additive A also include a fluorine-containing compound other than the above-described compounds represented by Formulae (A1) to (A3).
Such another fluorine-containing compound is preferably a compound having a molecular weight of 1,000 or less, and more preferably a compound having a molecular weight of 500 or less.
Examples of such another fluorine-containing compound include aromatic compounds substituted with a fluorine atom, lithium fluoroalkylsulfonate compounds, carbonate compounds having a fluorine atom, and oxalato compounds having a fluorine atom.
Examples of the aromatic compounds substituted with a fluorine atom include fluorotoluene (*o*-, *m*-, *p*-isomers), difluorotoluene, trifluorotoluene, tetrafluorotoluene, pentafluorotoluene, fluorobenzene, difluorobenzenes (*o*-, *m*-, *p*-isomers), 1-fluoro-4-*t*-butylbenzene, 2-fluorobiphenyl, fluorocyclohexylbenzene (for example, 1-fluoro-2-cyclohexylbenzene, 1-fluoro-3-cyclohexylbenzene, and 1-fluoro-4-cyclohexylbenzene), 2,4-difluoroanisole, 2,5-difluoroanisole, 2,6-difluoroanisole, and 3,5-difluoroanisole. Among them, fluorotoluenes (*o*-, *m*-, *p*-isomers) are preferable, and o-fluorotoluene is more preferable.
Examples of the lithium fluoroalkylsulfonate compounds include lithium trifluoromethane sulfonate and lithium pentafluoroethane sulfonate, and lithium trifluoromethane sulfonate is preferable.
Examples of the carbonate compounds having a fluorine atom include: chain carbonates, such as methyl trifluoromethyl carbonate, ethyl trifluoromethyl carbonate, bis(trifluoromethyl) carbonate, methyl (2,2,2-trifluoroethyl) carbonate, ethyl (2,2,2-trifluoroethyl) carbonate, and bis(2,2,2-trifluoroethyl) carbonate; and cyclic carbonates, such as 4-fluoroethylene carbonate, 4,4-difluoroethylene carbonate, 4,5-difluoroethylene carbonate, and 4-trifluoromethylethylene carbonate. Among them, 4-fluoroethylene carbonate, 4,4-difluoroethylene carbonate, and 4,5-difluoroethylene carbonate are preferable.
Examples of the oxalato compounds having a fluorine atom include lithium difluorobis(oxalato)phosphate, lithium tetrafluoro(oxalato)phosphate, and lithium difluoro(oxalato)borate.
In the nonaqueous electrolytic solution of the first aspect, a preferable combination of the electrolyte and the additive A from the standpoint of further reducing Al corrosion is:

a combination of an electrolyte that includes lithium bis(trifluoromethylsulfonyl)imide (LiTFSI) as a compound represented by Formula (1), and an additive A that includes at least one selected from the group consisting of a compound represented by Formula (A1) and a compound represented by Formula (A3); or
a combination of an electrolyte that includes lithium bis(fluorosulfonyl)imide as a compound represented by Formula (1), and an additive A that includes at least one selected from the group consisting of a compound represented by Formula (A1) and a compound represented by Formula (A2).

<Other Additives>

The nonaqueous electrolytic solution of the first aspect may contain at least one other additive than the above-described additive A.
Examples of such another additive include known additives that may be contained in a nonaqueous electrolytic solution.
Another additive may be, for example, a carbonate compound having a carbon-carbon unsaturated bond or a fluorine atom.
Examples of the carbonate compound having a carbon-carbon unsaturated bond or a fluorine atom include:

carbonate compounds having a carbon-carbon unsaturated bond, such as vinylene carbonate, dimethylvinylene carbonate, and divinyl carbonate;
carbonate compounds having a fluorine atom, such as fluoroethylene carbonate, difluoroethylene carbonate, and trifluoromethylethylene carbonate; and
oxalato compounds, such as lithium difluorobis(oxalato)phosphate, lithium tetrafluoro(oxalato)phosphate, lithium tris(oxalato)phosphate, lithium difluoro(oxalato)borate, and lithium bis(oxalato)borate.

Among them, vinylene carbonate and fluoroethylene carbonate are preferable.

The content of the carbonate compound having a carbon-carbon unsaturated bond or a fluorine atom (the total content when two or more such carbonate compounds are contained) is preferably from 1% by mass to 15% by mass, and more preferably from 5% by mass to 10% by mass, with respect to the total amount of the nonaqueous electrolytic solution.

Examples of another additive further include:

sulfur-containing compounds, such as ethylene sulfite, propylene sulfite, ethylene sulfate, propylene sulfate, butene sulfate, hexene sulfate, vinylene sulfate, 3-sulfolene, divinyl sulfone, dimethyl sulfate, and diethyl sulfate;
vinyl boronic acid compounds, such as dimethyl vinyl boronate, diethyl vinyl boronate, dipropyl vinyl boronate, and dibutyl vinyl boronate;
amides, such as dimethylformamide;
chain carbamates, such as methyl-*N,N*-dimethyl carbamate;
cyclic amides, such as *N*-methylpyrrolidone;
cyclic ureas, such as *N,N*-dimethylimidazolidinone;
boric acid esters, such as trimethyl borate, triethyl borate, tributyl borate, trioctyl borate, and tri(trimethylsilyl) borate;
phosphoric acid esters, such as trimethyl phosphate, triethyl phosphate, tributyl phosphate, trioctyl phosphate, tri(trimethylsilyl) phosphate, and triphenyl phosphate;
ethylene glycol derivatives, such as ethylene glycol dimethyl ether, diethylene glycol dimethyl ether, and polyethylene glycol dimethyl ether;
aromatic hydrocarbons, such as biphenyl, fluorobiphenyl, o-terphenyl, toluene, ethylbenzene, fluorobenzene, cyclohexylbenzene, 2-fluoroanisole, and 4-fluoroanisole; and
carboxylic anhydrides having a carbon-carbon unsaturated bond, such as maleic anhydride and norbornene dicarboxylic anhydride.

<Nonaqueous Solvent>

The nonaqueous electrolytic solution generally contains a nonaqueous solvent.

The nonaqueous solvent can be selected, as appropriate, from various known nonaqueous solvents, and it is preferable to use at least one selected from a cyclic aprotic solvent or a chain aprotic solvent.

When an increase in the flash point of the solvent is desired in order to improve the battery safety, it is preferable to use a cyclic aprotic solvent as the nonaqueous solvent.

(Cyclic Aprotic Solvent)

As the cyclic aprotic solvent, a cyclic carbonate, a cyclic carboxylic acid ester, a cyclic sulfone, or a cyclic ether can be used.

The cyclic aprotic solvent may be used singly, or two or more cyclic aprotic solvents may be used in mixture.

The proportion of the cyclic aprotic solvent in the nonaqueous solvent is preferably from 10% by mass to 100% by mass, more preferably from 20% by mass to 90% by mass, and particularly preferably from 30% by mass to 80% by mass. A proportion in this range can heighten the conductivity of the electrolytic solution, which relates to the battery charge-discharge characteristics.

Specific examples of the cyclic carbonate include ethylene carbonate, propylene carbonate, 1,2-butylene carbonate, 2,3-butylene carbonate, 1,2-pentylene carbonate, and 2,3-pentylene carbonate. Among them, ethylene carbonate and propylene carbonate, which have a high dielectric constant, can be preferably used. In the case of a battery using graphite as a negative electrode active material, ethylene carbonate is more preferable. It is also possible to use two or more cyclic carbonates in mixture.

Specific examples of the cyclic carboxylic acid ester include $\gamma$-butyrolactone, $\delta$-valerolactone, and alkyl-substituted products thereof, such as methyl-$\gamma$-butyrolactone, ethyl-$\gamma$-butyrolactone, and ethyl-$\delta$-valerolactone.

The cyclic carboxylic acid ester has a low vapor pressure, a low viscosity and a high dielectric constant, thereby allowing the viscosity of the electrolytic solution to be reduced without lowering the flash point of the electrolytic solution and the dissociation degree of the electrolyte. Accordingly, the cyclic carboxylic acid ester has a feature such that the cyclic carboxylic acid ester can increase the conductivity of the electrolytic solution, which is an index related to the battery discharge characteristics, without increasing the flammability of the electrolytic solution. Therefore, when it is desired to increase the flash point of the solvent, it is preferable to use a cyclic carboxylic acid ester as the cyclic aprotic solvent. $\gamma$-butyrolactone is most preferable.

It is also preferable that a cyclic carboxylic acid ester and another cyclic aprotic solvent are used in mixture. An example thereof is a mixture of a cyclic carboxylic acid ester and a cyclic carbonate and/or chain carbonate.

Specific examples of a combination of a cyclic carboxylic acid ester and a cyclic carbonate and/or chain carbonate include: a combination of γ-butyrolactone and ethylene carbonate; a combination of γ-butyrolactone and ethylene carbonate and dimethyl carbonate; a combination of γ-butyrolactone and ethylene carbonate and methyl ethyl carbonate; a combination of γ-butyrolactone and ethylene carbonate and diethyl carbonate; a combination of γ-butyrolactone and propylene carbonate; a combination of γ-butyrolactone and propylene carbonate and dimethyl carbonate; a combination of γ-butyrolactone and propylene carbonate and methyl ethyl carbonate; a combination of γ-butyrolactone and propylene carbonate and diethyl carbonate; a combination of γ-butyrolactone and ethylene carbonate and propylene carbonate; a combination of γ-butyrolactone and ethylene carbonate and propylene carbonate and dimethyl carbonate; a combination of γ-butyrolactone and ethylene carbonate and propylene carbonate and methyl ethyl carbonate; a combination of γ-butyrolactone and ethylene carbonate and propylene carbonate and diethyl carbonate; a combination of γ-butyrolactone and ethylene carbonate and dimethyl carbonate and methyl ethyl carbonate; a combination of γ-butyrolactone and ethylene carbonate and dimethyl carbonate and diethyl carbonate; a combination of γ-butyrolactone and ethylene carbonate and methyl ethyl carbonate and diethyl carbonate; a combination of γ-butyrolactone and ethylene carbonate and dimethyl carbonate and methyl ethyl carbonate and diethyl carbonate; a combination of γ-butyrolactone and ethylene carbonate and propylene carbonate and dimethyl carbonate and methyl ethyl carbonate; a combination of γ-butyrolactone and ethylene carbonate and propylene carbonate and dimethyl carbonate and diethyl carbonate; a combination of γ-butyrolactone and ethylene carbonate and propylene carbonate and methyl ethyl carbonate and diethyl carbonate; a combination of γ-butyrolactone and ethylene carbonate and propylene carbonate and dimethyl carbonate and methyl ethyl carbonate and diethyl carbonate; a combination of γ-butyrolactone and sulfolane; a combination of γ-butyrolactone and ethylene carbonate and sulfolane; a combination of γ-butyrolactone and propylene carbonate and sulfolane; a combination of γ-butyrolactone and ethylene carbonate and propylene carbonate and sulfolane; and a combination of γ-butyrolactone and sulfolane and dimethyl carbonate.

Examples of the cyclic sulfone include sulfolane, 2-methyl sulfolane, 3-methyl sulfolane, dimethyl sulfone, diethyl sulfone, dipropyl sulfone, methyl ethyl sulfone, and methyl propyl sulfone.

Examples of the cyclic ether include dioxolane.

(Chain Aprotic Solvent)

As the chain aprotic solvent, substances such as a chain carbonate, a chain carboxylic acid ester, a chain ether, or a chain phosphoric acid ester can be used.

The proportion of the chain aprotic solvent in the nonaqueous solvent is preferably from 10% by mass to 100% by mass, more preferably from 20% by mass to 90% by mass, and particularly preferably from 30% by mass to 80% by mass.

Specific examples of the chain carbonate include dimethyl carbonate, methyl ethyl carbonate, diethyl carbonate, methyl propyl carbonate, methyl isopropyl carbonate, ethyl propyl carbonate, dipropyl carbonate, methyl butyl carbonate, ethyl butyl carbonate, dibutyl carbonate, methyl pentyl carbonate, ethyl pentyl carbonate, dipentyl carbonate, methyl heptyl carbonate, ethyl heptyl carbonate, diheptyl carbonate, methyl hexyl carbonate, ethyl hexyl carbonate, dihexyl carbonate, methyl octyl carbonate, ethyl octyl carbonate, dioctyl carbonate, and methyl trifluoroethyl carbonate. It is also possible to use two or more chain carbonates in mixture.

Specific examples of the chain carboxylic acid ester include methyl pivalate. Specific examples of the chain ether include dimethoxyethane.

Specific examples of the chain phosphoric acid ester include trimethyl phosphate.

(Combination of Solvents)

The nonaqueous electrolytic solution of the first aspect may include only a single nonaqueous solvent, or may include two or more nonaqueous solvents.

The aprotic solvent may include only (i) one cyclic aprotic solvent or plural cyclic aprotic solvents, or may include only (ii) one chain aprotic solvent or plural chain aprotic solvents, or may include (iii) a mixture of a cyclic aprotic solvent and a chain protic solvent. When it is particularly desired to improve the battery load characteristics and low-temperature characteristics, it is preferable to use a combination of a cyclic aprotic solvent and a chain aprotic solvent as the nonaqueous solvent.

From the standpoint of the electrochemical stability of the electrolytic solution, the cyclic aprotic solvent is most preferably a cyclic carbonate, and the chain aprotic solvent is most preferably a chain carbonate. The conductivity of the electrolytic solution, which relates to the battery charge-discharge characteristics, can also be increased by using a combination of a cyclic carboxylic acid ester and a cyclic carbonate and/or chain carbonate.

Specific examples of the combination of a cyclic carbonate and a chain carbonate include: a combination of ethylene carbonate and dimethyl carbonate; a combination of ethylene carbonate and methyl ethyl carbonate; a combination of ethylene carbonate and diethyl carbonate; a combination of propylene carbonate and dimethyl carbonate; a

combination of propylene carbonate and methyl ethyl carbonate; a combination of propylene carbonate and diethyl carbonate; a combination of ethylene carbonate and propylene carbonate and methyl ethyl carbonate; a combination of ethylene carbonate and propylene carbonate and diethyl carbonate; a combination of ethylene carbonate and dimethyl carbonate and methyl ethyl carbonate; a combination of ethylene carbonate and dimethyl carbonate and diethyl carbonate; a combination of ethylene carbonate and methyl ethyl carbonate and diethyl carbonate; a combination of ethylene carbonate and dimethyl carbonate and methyl ethyl carbonate and diethyl carbonate; a combination of ethylene carbonate and propylene carbonate and dimethyl carbonate and methyl ethyl carbonate; a combination of ethylene carbonate and propylene carbonate and dimethyl carbonate and diethyl carbonate; a combination of ethylene carbonate and propylene carbonate and methyl ethyl carbonate and diethyl carbonate; a combination of and ethylene carbonate and propylene carbonate and dimethyl carbonate and methyl ethyl carbonate and diethyl carbonate.

The mixing ratio of the cyclic carbonate and the chain carbonate (cyclic carbonate:chain carbonate) is, in terms of mass ratio, from 5:95 to 80:20, preferably from 10:90 to 70:30, and particularly preferably from 15:85 to 55:45. By regulating the mixing ratio within this range, an increase in the viscosity of the electrolytic solution can be curbed, the dissociation degree of the electrolyte can be heightened, and, therefore, the conductivity of the electrolytic solution, which relates to the battery charge-discharge characteristics, can be increased. In addition, the solubility of the electrolyte can be further increased. Accordingly, the electrolytic solution can have an excellent electrical conductivity at normal temperature or at low temperatures, and the battery load characteristics in a temperature range of from normal temperature to low temperature can be improved.

(Other Solvents)

Examples of the nonaqueous solvent also include solvents other than those described above.

Specific examples of such other solvents include: amides, such as dimethylformamide; chain carbamates, such as methyl-*N,N*-dimethyl carbamate; cyclic amides, such as *N*-methylpyrrolidone; cyclic ureas, such as *N,N*-dimethylimidazolidinone; boron compounds, such as trimethyl borate, triethyl borate, tributyl borate, trioctyl borate, and trimethylsilyl borate; and polyethylene glycol derivatives represented by the following formulae:

$HO(CH_2CH_2O)_aH$,
$HO[CH_2CH(CH_3)O]_bH$,
$CH_3O(CH_2CH_2O)_cH$,
$CH_3O[CH_2CH(CH_3)O]_dH$,
$CH_3O(CH_2CH_2O)_eCH_3$,
$CH_3O[CH_2CH(CH_3)O]_fCH_3$,
$C_9H_{19}PhO(CH_2CH_2O)_g[CH(CH_3)O]_hCH_3$ (wherein, Ph represnts a phenyl group), and
$CH_3O[CH_2CH(CH_3)O]_iCO[OCH(CH_3)CH_2]_jOCH_3$.

In the above formulae, a to f each represent an integer from 5 to 250; g to j each represent an integer from 2 to 249; $5 \leq g + h \leq 250$; and $5 \leq i + j \leq 250$.

[Lithium Secondary Battery of First Aspect]

The lithium secondary battery of the first aspect includes: a positive electrode including an aluminum (Al)-containing positive electrode current collector; a negative electrode; and the nonaqueous electrolytic solution of the first aspect.

<Positive Electrode>

The positive electrode in the first aspect includes an Al-containing positive electrode current collector.

The positive electrode current collector may contain an element other than Al.

The positive electrode current collector may contain, for example, a metal material such as stainless steel, nickel, titanium, or tantalum, or a carbon material such as carbon cloth or carbon paper.

The positive electrode may contain a positive electrode active material.

Examples of the positive electrode active material contained in the positive electrode include transition metal oxides and transition metal sulfides, such as $MoS_2$, $TiS_2$, $MnO_2$, and $V_2O_5$; composite oxides composed of lithium and one or more transition metals, such as $LiCoO_2$, $LiMnO_2$, $LiMn_2O_4$, $LiNiO_2$, $LiNixCo_{(1-X)}O_2$ [0 < X < 1], $Li_{1+\alpha}Me_{1-\alpha}O_2$ having an $\alpha$-$NaFeO_2$-type crystal structure (Me representing a transition metal element such as Mn, Ni, or Co, 1.0 ≤ (1

+ $\alpha$)/(1 - $\alpha$) $\leq$ 1.6), $LiNi_xCo_yMn_zO_2$ [x + y + z = 1, 0 < x < 1, 0 < y < 1, 0 < z < 1] (for example, $LiNi_{0.33}Co_{0.33}Mn_{0.33}O_2$ or $LiNi_{0.5}Co_{0.2}Mn_{0.3}O_2$), $LiFePO_4$, and $LiMnPO_4$; and electroconductive polymer materials, such as polyaniline, polythiophene, polypyrrole, polyacetylene, polyacene, dimercaptothiadiazole, and polyaniline complexes. Among them, composite oxides composed of lithium and one or more transition metals are particularly preferable. When the negative electrode is metallic lithium or a lithium alloy, a carbon material can be used as the positive electrode. Alternatively, a mixture of a carbon material and a composite oxide composed of lithium and one or more transition metals can be used as the positive electrode.

The positive electrode active material may be used singly, or two or more thereof may be used in mixture. When the conductivity of the positive electrode active material is not sufficient, the positive electrode may be configured by using the positive electrode active material together with a conductive aid. Examples of the conductive aid include carbon materials, such as carbon black, amorphous whisker, and graphite.

<Negative Electrode>

The negative electrode may include a negative electrode active material and a negative electrode current collector.

As the negative electrode active material in the negative electrode, at least one selected from the group consisting of metallic lithium, lithium-containing alloys, metals and alloys that can be alloyed with lithium, oxides capable of doping and dedoping lithium ions, transition metal nitrides capable of doping and dedoping lithium ions, and carbon materials capable of doping and dedoping lithium ions can be used (these materials may be used singly, or a mixture containing two or more thereof may be used).

Examples of the metals and alloys that can be alloyed with lithium (or lithium ions) include silicon, silicon alloys, tin, and tin alloys. Another example is lithium titanate.

Among them, a carbon material capable of doping and dedoping lithium ions is preferable. Examples of such a carbon material include carbon black, activated carbon, graphite materials (artificial graphites, natural graphites), and amorphous carbon materials. The form of the carbon material may be any of a fibrous form, a spherical form, a potato form or a flake form.

Specific examples of the amorphous carbon materials include hard carbon, cokes, mesocarbon microbeads (MCMB) calcined at 1,500°C or lower, and mesophase pitch carbon fibers (MCF).

Examples of the graphite materials include natural graphites and artificial graphites. As artificial graphite, graphitized MCMB, graphitized MCF and the like can be used. Graphite materials that contain boron can also be used. Further, graphite materials coated with a metal such as gold, platinum, silver, copper, or tin, graphite materials coated with amorphous carbon, and mixtures of amorphous carbon and graphite can also be used as graphite materials.

These carbon materials may be used singly, or two or more thereof may be used in mixture.

The above-described carbon material is particularly preferably a carbon material having an interplanar spacing d(002) between (002) planes, as measured by an X-ray analysis, of 0.340 nm or less. As the carbon material, a graphite having a true density of not less than 1.70 g/$cm^3$, or a highly crystalline carbon material having a property similar to such graphite is also preferable. By using a carbon material such as those described above, the energy density of the battery can be further increased.

The material of the negative electrode current collector included in the negative electrode is not particularly restricted, and any known material for a negative electrode current collector may be used.

Specific examples of the negative electrode current collector include metal materials, such as copper, nickel, stainless steel, and nickel-plated steel. Among them, copper is particularly preferable because of its workability.

<Separator>

The lithium secondary battery of the first aspect preferably includes a separator between the negative electrode and the positive electrode.

The separator is a membrane that electrically insulates the positive electrode and the negative electrode from each other and allows lithium ions to pass therethrough, and examples of the separator include a porous film and a polymer electrolyte.

As the porous film, a microporous polymer film is suitably used, and examples of the material thereof include polyolefins, polyimides, polyvinylidene fluorides, and polyesters.

Particularly, a porous polyolefin is preferable, and specific examples thereof include porous polyethylene films, porous polypropylene films, and multilayer films including a porous polyethylene film and a porous polypropylene film. The porous polyolefin film may be coated with another resin having excellent thermal stability.

Examples of the polymer electrolyte include polymers in which a lithium salt is dissolved, and polymers that are swollen with an electrolytic solution.

The nonaqueous electrolytic solution of the first aspect may also be used for the purpose of swelling a polymer to obtain a polymer electrolyte.

<Battery Configuration>

The lithium secondary battery of the first aspect can take any of a variety of known shapes, such as a cylindrical shape, a coin shape, a rectangular shape, a laminate shape, a film shape, or any other shape. However, the battery has the same basic structure regardless of its shape, and the design of the battery can be modified in accordance with the purpose.

One example of the lithium secondary battery of the first aspect is a laminate battery.

FIG. 1 is a schematic perspective view illustrating a laminate battery, which is one example of the lithium secondary battery of the first aspect the present disclosure, and FIG. 2 is a schematic cross-sectional view taken along the thickness direction of stacked electrodes housed in the laminate battery illustrated in FIG. 1.

FIG.1 and FIG. 2 are also a schematic perspective view and a schematic cross-sectional view, respectively, which illustrate one example of a laminate battery that is one example of the after-mentioned lithium secondary battery of the second aspect.

The laminate battery illustrated in FIG. 1 includes a laminate outer package 1, which houses therein a nonaqueous electrolytic solution (not illustrated in FIG. 1) and stacked electrodes (not illustrated in FIG. 1) and of which the interior thereof is hermetically sealed by sealing at the periphery of the laminate outer package 1. As the laminate outer package 1, for example, a laminate outer package made of aluminum is used.

As illustrated in FIG. 2, the stacked electrodes housed in the laminate outer package 1 include: a layered body formed by alternately layering a positive electrode plate 5 and a negative electrode plate 6 with a separator 7 disposed therebetween; and a separator 8 surrounding the layered body. The positive electrode plate 5, the negative electrode plate 6, the separator 7, and the separator 8 are impregnated with the nonaqueous electrolytic solution of the first aspect.

Plural positive electrode plates 5 in the stacked electrodes are each electrically connected to a positive electrode terminal 2 via a positive electrode tab (not illustrated), and a part of the positive electrode terminal 2 protrudes outward from a peripheral end portion of the laminate outer package 1 (FIG. 1). The peripheral end portion of the laminate outer package 1 at which the positive electrode terminal 2 protrudes is sealed with an insulating seal 4.

Similarly, plural negative electrode plates 6 in the stacked electrodes are each electrically connected to a negative electrode terminal 3 via a negative electrode tab (not illustrated), and a part of the negative electrode terminal 3 protrudes outward from a peripheral end portion of the laminate outer package 1 (FIG. 1). The peripheral end portion of the laminate outer package 1 at which the negative electrode terminal 3 protrudes is sealed with the insulating seal 4.

In the above-described laminate battery according to one example, the number of the positive electrode plates 5 is five, the number of the negative electrode plates 6 is six, and the positive electrode plates 5 and the negative electrode plates 6 are layered with the separator 7 disposed therebetween such that the outermost layers on both sides are negative electrode plates 6. In the laminate battery, however, the number of the positive electrode plates, the number of the negative electrode plates, and the arrangement of these electrode plates are not restricted to the above-described one example, and various modifications can naturally be made.

Another example of the lithium secondary battery of the first aspect according to the present disclosure is a coin battery.

FIG. 3 is a schematic cross-sectional view illustrating one example of a coin battery, which is another example of the lithium secondary battery of the first aspect according to the present disclosure.

FIG. 3 is also a schematic cross-sectional view illustrating one example of a coin battery, which is another example of the after-mentioned lithium secondary battery of the second aspect.

In the coin battery illustrated in FIG. 3, a disc-shaped negative electrode 12, a separator 15 into which a nonaqueous electrolytic solution has been injected, a disc-shaped positive electrode 11 and, if required, spacer plates 17 and 18 made of, for example, stainless steel or aluminum, are housed between a positive electrode can 13 (hereinafter, also referred to as "battery can") and a sealing plate 14 (hereinafter, also referred to as "battery can lid") in a state in which the disc-shaped negative electrode 12, the separator 15, the disc-shaped positive electrode 11, and, optionally, the spacer plates 17 and 18 are layered in this order. The positive electrode can 13 and the sealing plate 14, with a gasket 16 therebetween, are tightly sealed by seaming.

In this example, the nonaqueous electrolytic solution of the first aspect is used as the nonaqueous electrolytic solution injected into the separator 15.

The lithium secondary battery of the first aspect may be a lithium secondary battery obtained by charging and discharging a lithium secondary battery (a lithium secondary battery that has not experienced charging or discharging) that includes a negative electrode, a positive electrode and the above-described nonaqueous electrolytic solution of the first aspect.

In other words, the lithium secondary battery of the first aspect may be a lithium secondary battery (a lithium

secondary battery that has experienced charging and discharging) obtained by first preparing a lithium secondary battery that includes a negative electrode, a positive electrode and the above-described nonaqueous electrolytic solution of the first aspect and that has not experienced charging and discharging, and then subjecting the prepared lithium secondary battery to charging and discharging at least once.

The use of the lithium secondary battery of the first aspect is not particularly restricted, and the lithium secondary battery of the first aspect can be used in a variety of known applications. For example, the lithium secondary battery of the first aspect can be widely utilized in small portable devices as well as large machines, such as laptop personal computers, mobile personal computers, mobile phones, headphone stereos, video cameras, liquid crystal televisions, handy cleaners, electronic organizers, calculators, radios, back-up power supplies, motors, automobiles, electric cars, motorcycles, electric motorcycles, bicycles, electric bicycles, lighting equipment, gaming machines, timepieces, electric tools, and cameras.

[Nonaqueous Electrolytic Solution for Battery According to Second Aspect]

The nonaqueous electrolytic solution for a battery (hereinafter, also simply referred to as "nonaqueous electrolytic solution") of the second aspect according to the present disclosure contains: an electrolyte that includes a compound represented by the following Formula (1); and a nonaqueous solvent including a fluorine-containing compound (hereinafter also referred to as the "specific fluorine-containing compound") that is at least one selected from the group consisting of a fluorine-containing carbonate compound and a fluorine-containing ether compound,
the concentration of the compound represented by Formula (1) being from 0.1 mol/L to 2.0 mol/L.

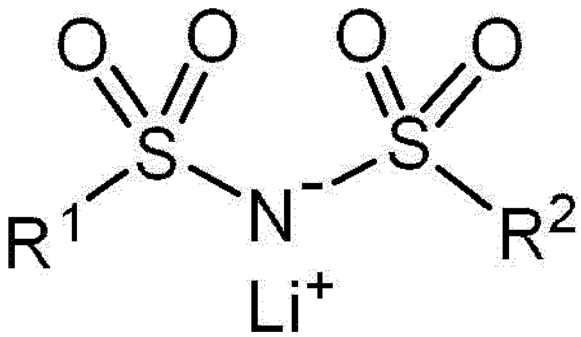

(1)

In Formula (1), each of $R^1$ and $R^2$ independently represents a fluorine atom, a trifluoromethyl group, or a pentafluoroethyl group.

As a result of the studies conducted by the present inventors, the present inventors have found that a battery including a nonaqueous electrolytic solution containing a compound represented by Formula (1) as an electrolyte at a concentration of 0.1 mol/L or higher and an aluminum-containing positive electrode current collector experiences a significant increase in battery resistance during storage, in some cases. It is conceivable that one reason therefor is corrosion of the aluminum-containing positive electrode current collector by the compound represented by Formula (1).

With regard to the increase in battery resistance during storage, the nonaqueous electrolytic solution of the second aspect curbs an increase in the battery resistance during storage even though the nonaqueous electrolytic solution contains the compound represented by Formula (1) as an electrolyte at a concentration of 0.1 mol/L or higher. It is conceivable that one reason for exertion of this effect is that inclusion of the specific fluorine-containing compound in the nonaqueous solvent causes a passivation film mainly composed of $AlF_3$ to be formed on the surface of the aluminum-containing positive electrode current collector, and the passivation film can reduce the corrosion of the aluminum-containing positive electrode current collector (hereinafter also simply referred to as "Al corrosion").

Further, according to the nonaqueous electrolytic solution of the second aspect, the battery capacity can be improved as well. It is conceivable that also the reason for exertion of this effect is reduction of the Al corrosion.

<Electrolyte>

The electrolyte in the nonaqueous electrolytic solution of the second aspect includes at least one compound represented by Formula (1).

It is conceivable that a compound represented by Formula (1) (specifically, a compound that is represented by Formula (1) and in which each of $R^1$ and $R^2$ independently represents a fluorine atom, a trifluoromethyl group, or a pentafluoroethyl group) has a higher tendency to cause Al corrosion and an increase in the battery resistance during storage, than that of a compound in which at least one of $R^1$ and $R^2$ in Formula (1) is a fluoroalkyl group having 3 or

more carbon atoms.

In the nonaqueous electrolytic solution of the second aspect, these problems are solved by incorporating the specific fluorine-containing compound into the nonaqueous solvent.

It is preferable that each of $R^1$ and $R^2$ in Formula (1) is independently a fluorine atom or a trifluoromethyl group.

When each of $R^1$ and $R^2$ in Formula (1) is independently a fluorine atom or a trifluoromethyl group, the problem of an increase in the battery resistance during storage caused by the compound represented by Formula (1) tends to be more strongly manifested.

Therefore, when each of $R^1$ and $R^2$ is independently a fluorine atom or a trifluoromethyl group, the effect exerted by the incorporation of the specific fluorine-containing compound into the nonaqueous solvent is more remarkable (in other words, the degree of curbing of an increase in the battery resistance during storage is greater).

Examples of the compound represented by Formula (1) include lithium bis(fluorosulfonyl)imide, lithium bis(trifluoromethylsulfonyl)imide, and lithium bis(pentafluoroethylsulfonyl)imide.

Lithium bis(fluorosulfonyl)imide (abbreviated as "LiFSI") is a compound that is represented by Formula (1) and in which both of $R^1$ and $R^2$ are fluorine atoms.

Lithium bis(trifluoromethylsulfonyl)imide (abbreviated as "LiTFSI") is a compound that is represented by Formula (1) and in which both of $R^1$ and $R^2$ are trifluoromethyl groups. Lithium bis(trifluoromethylsulfonyl)imide may also be referred to as "lithium bis(trifluoromethanesulfonyl)imide" .

Lithium bis(pentafluoroethylsulfonyl)imide is a compound that is represented by Formula (1) and in which both of $R^1$ and $R^2$ are pentafluoroethyl groups.

In the nonaqueous electrolytic solution of the second aspect, the concentration of the compound represented by Formula (1) is from 0.1 mol/L to 2.0 mol/L.

In general, an increase in the battery resistance during storage is more strongly manifested when the concentration of the compound represented by Formula (1) is 0.1 mol/L or higher.

However, the nonaqueous electrolytic solution of the second aspect is capable of curbing an increase in the battery resistance during storage even though the concentration of the compound represented by Formula (1) is 0.1 mol/L or higher, owing to the incorporation of the specific fluorine-containing compound into the nonaqueous solvent. In other words, in the nonaqueous electrolytic solution of the second aspect, the effect produced by the incorporation of the specific fluorine-containing compound into the nonaqueous solvent is more remarkable (in other words, the degree of curbing of an increase in the battery resistance during storage is greater) due to the concentration of the compound represented by Formula (1) being 0.1 mol/L or higher.

The concentration of the compound represented by Formula (1) may be 0.15 mol/L or higher, or may be 0.2 mol/L or higher, or may be 0.3 mol/L or higher, or may be 0.4 mol/L or higher.

Further, in the nonaqueous electrolytic solution of the second aspect, the problem of an increase in the battery resistance during storage caused by the compound represented by Formula (1) is alleviated due to the concentration of the compound represented by Formula (1) being regulated to be 2.0 mol/L or lower, .

The upper limit of the concentration of the compound represented by Formula (1) may be 1.5 mol/L, or may be 1.0 mol/L.

(Other Electrolyte)

The electrolyte in the nonaqueous electrolytic solution of the second aspect may include at least one electrolyte (hereinafter also referred to as "another electrolyte") other than compounds represented by Formula (1).

Another electrolyte that can be used may be any electrolyte that is usually used as an electrolyte for a nonaqueous electrolytic solution.

Specific examples of another electrolyte include: tetraalkyl ammonium salts, such as $(C_2H_5)_4NPF_6$, $(C_2H_5)_4NBF_4$, $(C_2H_5)_4NClO_4$, $(C_2H_5)_4NAsF_6$, $(C_2H_5)_4N_2SiF_6$, $(C_2H_5)_4NOSO_2C_kF_{(2k+1)}$ (k representing an integer from 1 to 8), and $(C_2H_5)_4NPF_n[C_kF_{(2k+1)}]_{(6-n)}$ (n being from 1 to 5, and k representing an integer from 1 to 8); and lithium salts, such as $LiPF_6$, $LiBF_4$, $LiClO_4$, $LiAsF_6$, $Li_2SiF_6$, $LiOSO_2C_kF_{(2k+1)}$ (k representing an integer from 1 to 8), and $LiPF_n[C_kF_{(2k+1)}]_{(6-n)}$ (n being from 1 to 5, and k representing an integer from 1 to 8). Lithium salts represented by the following Formulae are also usable.

$LiC(SO_2R^7)(SO_2R^8)(SO_2R^9)$, $LiN(SO_2OR^{10})(SO_2OR^{11})$ (wherein, $R^7$ to $R^{11}$ may be the same as or different from one another, and each represent a perfluoroalkyl group having from 2 to 8 carbon atoms), $LiN(SO_2R^{12})(SO_2R^{13})$ (wherein, $R^{12}$ and $R^{13}$ may be the same as or different from each other, and each represent a perfluoroalkyl group having from 3 to 8 carbon atoms).

These electrolytes may be used singly, or two or more electrolytes may be mixed.

Among these electrolytes, lithium salts are particularly preferable as other electrolytes. Further, $LiPF_6$, $LiBF_4$, $LiOSO_2C_kF_{(2k+1)}$ (k representing an integer from 1 to 8), $LiClO_4$, $LiAsF_6$, $LiNSO_2[C_kF_{(2k+1)}]_2$ (k representing an integer from 1 to 8), or $LiPF_n[C_kF_{(2k+1)}]_{(6-n)}$ (n being from 1 to 5, and k representing an integer from 1 to 8) are preferable, and

$LiPF_6$ is particularly preferable.

An embodiment in which the electrolyte in the nonaqueous electrolytic solution of the second aspect includes $LiPF_6$ as another electrolyte is advantageous in terms of, for example, electrical conductivity and oxidation resistance.

The concentration of another electrolyte is preferably from 0.1 mol/L to 2.0 mol/L.

The lower limit of the concentration of another electrolyte may be 0.2 mol/L, or may be 0.3 mol/L, or may be 0.4 mol/L, or may be 0.5 mol/L.

The upper limit of the concentration of another electrolyte may be 1.5 mol/L, or may be 1.0 mol/L.

When another electrolyte is $LiPF_6$, the concentration of $LiPF_6$ is preferably from 0.1 mol/L to 2.0 mol/L.

The lower limit of the concentration of $LiPF_6$ may be 0.2 mol/L, or may be 0.3 mol/L, or may be 0.4 mol/L, or may be 0.5 mol/L.

The upper limit of the concentration of $LiPF_6$ may be 1.5 mol/L, or may be 1.0 mol/L.

A particularly preferable embodiment of the nonaqueous electrolytic solution of the second aspect is an embodiment in which the electrolyte further includes $LiPF_6$, and in which the ratio of the number of moles of the compound represented by Formula (1) to the total of the number of moles of the compound represented by Formula (1) and the number of moles of $LiPF_6$ (hereinafter also referred to as "molar ratio [Compound represented by Formula (1)/(Compound represented by Formula (1) + $LiPF_6$)]") is from more than 0.1 to 0.9.

Generally, when the molar ratio [Compound represented by Formula (1)/(Compound represented by Formula (1) + $LiPF_6$)] is higher than 0.1, an increase in the battery resistance during storage tends to be more strongly manifested.

However, the nonaqueous electrolytic solution of the second aspect is capable of curbing an increase in the battery resistance during storage even when the molar ratio [Compound represented by Formula (1)/(Compound represented by Formula (1) + $LiPF_6$)] is higher than 0.1, due to the incorporation of the specific fluorine-containing compound into the nonaqueous solvent. In other words, when the molar ratio [Compound represented by Formula (1)/(Compound represented by Formula (1) + $LiPF_6$)] is higher than 0.1, the effect produced by the incorporation of the specific fluorine-containing compound into the nonaqueous solvent is more remarkable (in other words, the degree of curbing of an increase in the battery resistance during storage is greater).

Meanwhile, a molar ratio [Compound represented by Formula (1)/(Compound represented by Formula (1) + $LiPF_6$)] of 0.9 or lower is advantageous in terms of, for example, electrical conductivity and oxidation resistance.

The molar ratio [Compound represented by Formula (1)/(Compound represented by Formula (1) + $LiPF_6$)] is more preferably from 0.15 to 0.8, still more preferably from 0.2 to 0.8, and further more preferably from 0.3 to 0.7.

<Nonaqueous Solvent>

The nonaqueous electrolytic solution of the second aspect contains a nonaqueous solvent including the specific fluorine-containing compound (specifically, at least one selected from the group consisting of a fluorine-containing carbonate compound and a fluorine-containing ether compound).

Examples of the fluorine-containing carbonate compound include fluorine-containing cyclic carbonate compounds and fluorine-containing chain carbonate compounds.

Examples of the fluorine-containing ether compound include fluorine-containing cyclic ether compounds and fluorine-containing chain ether compounds.

From the standpoint of further curbing an increase in the battery resistance during storage, the proportion of the specific fluorine-containing compound to the nonaqueous solvent is preferably 1% by mass or higher, more preferably 10% by mass or higher, still more preferably higher than 20% by mass, and further more preferably 25% by mass or higher.

(Specific Fluorine-Containing Compound)

The specific fluorine-containing compound is preferably at least one selected from the group consisting of a compound represented by the following Formula (F1), a compound represented by the following Formula (F2), and a compound represented by the following Formula (F3).

The compound represented by Formula (F1) and the compound represented by Formula (F2) are examples of fluorine-containing carbonate compounds, and the compound represented by the following Formula (F3) is an example of fluorine-containing ether compounds.

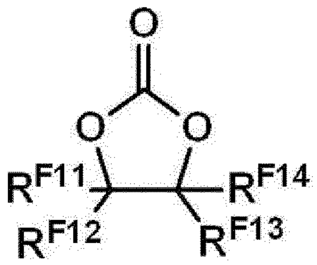

(F1)

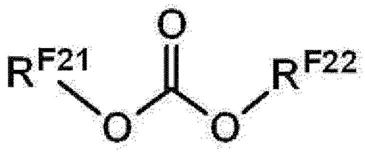

(F2)

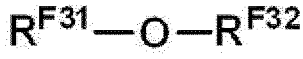

(F3)

In Formula (F1), $R^{F11}$ represents a fluorine atom or a fluorinated hydrocarbon group having from 1 to 6 carbon atoms, and each of $R^{F12}$ to $R^{F14}$ independently represents a hydrogen atom, a fluorine atom, a hydrocarbon group having from 1 to 6 carbon atoms, or a fluorinated hydrocarbon group having from 1 to 6 carbon atoms.

In Formula (F2), $R^{F21}$ represents a fluorinated hydrocarbon group having from 1 to 6 carbon atoms, and $R^{F22}$ represents a hydrocarbon group having from 1 to 6 carbon atoms, or a fluorinated hydrocarbon group having from 1 to 6 carbon atoms.

In Formula (F3), $R^{F31}$ represents a fluorinated hydrocarbon group having from 1 to 6 carbon atoms, $R^{F32}$ represents a hydrocarbon group having from 1 to 6 carbon atoms, or a fluorinated hydrocarbon group having from 1 to 6 carbon atoms, and $R^{F31}$ and $R^{F32}$ are optionally bound to each other to form a ring.

In Formulae (F1) to (F3), the "fluorinated hydrocarbon group having from 1 to 6 carbon atoms" means a hydrocarbon group having from 1 to 6 carbon atoms which is substituted with at least one fluorine atom.

-Compound Represented by Formula (F1)-

Examples of the fluorinated hydrocarbon group having from 1 to 6 carbon atoms which is represented by any of $R^{F11}$ to $R^{F14}$ in Formula (F1) include: fluoroalkyl groups, such as a fluoromethyl group, a difluoromethyl group, a trifluoromethyl group, a 2,2,2-trifluoroethyl group, a 1,1,2,2-tetrafluoroethyl group, a perfluoroethyl group, a 2,2,3,3-tetrafluoropropyl group, a perfluoropropyl group, a perfluorobutyl group, a perfluoropentyl group, a perfluorohexyl group, a perfluoroisopropyl group, and a perfluoroisobutyl group; and fluoroalkenyl groups, such as a 2-fluoroethenyl group, a 2,2-difluoroethenyl group, a 2-fluoro-2-propenyl group, a 3,3-difluoro-2-propenyl group, a 2,3-difluoro-2-propenyl group, a 3,3-difluoro-2-methyl-2-propenyl group, a 3-fluoro-2-butenyl group, a perfluorovinyl group, a perfluoropropenyl group, and a perfluorobutenyl group.

Among them, a fluoroalkyl group having from 1 to 6 carbon atoms is preferable, a fluoroalkyl group having from 1 to 3 carbon atoms is more preferable, a fluoromethyl group, a difluoromethyl group or a trifluoromethyl group is still more preferable, and a trifluoromethyl group is particularly preferable.

Examples of the hydrocarbon group having from 1 to 6 carbon atoms which is represented by any of $R^{F12}$ to $R^{F14}$ in Formula (F1) include: alkyl groups, such as a methyl group, an ethyl group, an n-propyl group, an isopropyl group, a 1-ethylpropyl group, an n-butyl group, an isobutyl group, a *sec*-butyl group, a *tert*-butyl group, a 2-methylbutyl group, a 3,3-dimethylbutyl group, an n-pentyl group, an isopentyl group, a neopentyl group, a 1-methylpentyl group, an n-hexyl group, an isohexyl group, a *sec*-hexyl group, and a *tert*-hexyl group; and alkenyl groups, such as a vinyl group, a 1-propenyl group, an allyl group, a 1-butenyl group, a 2-butenyl group, a 3-butenyl group, a pentenyl group, a hexenyl group, an isopropenyl group, a 2-methyl-2-propenyl group, a 1-methyl-2-propenyl group, and a 2-methyl-1-propenyl group.

Among them, an alkyl group having from 1 to 6 carbon atoms is preferable, an alkyl group having from 1 to 3 carbon atoms is more preferable, a methyl group or an ethyl group is still more preferable, and a methyl group is particularly preferable.

In Formula (F1), $R^{F11}$ represents preferably a fluorine atom.

In Formula (F1), each of $R^{F12}$ to $R^{F14}$ independently representspreferably a hydrogen atom, a fluorine atom or a methyl group, more preferably a hydrogen atom or a fluorine atom, and particularly preferably a hydrogen atom.

The compound represented by Formula (F1) is preferably 4-fluoroethylene carbonate (abbreviated as "FEC"), 4,4-difluoroethylene carbonate, 4,5-difluoroethylene carbonate, or 4-trifluoromethylethylene carbonate, more preferably 4-fluoroethylene carbonate, 4,4-difluoroethylene carbonate, or 4,5-difluoroethylene carbonate, and particularly preferably 4-fluoroethylene carbonate.

-Compound Represented by Formula (F2)-

Specific examples of the fluorinated hydrocarbon group having from 1 to 6 carbon atoms which is represented by any of $R^{F21}$ or $R^{F22}$ in Formula (F2) are the same as the specific examples of the fluorinated hydrocarbon group having from 1 to 6 carbon atoms which is represented by any of $R^{F11}$ to $R^{F14}$ in Formula (F1).

In Formula (F2), the fluorinated hydrocarbon group having from 1 to 6 carbon atoms which is represented by $R^{F21}$ and $R^{F22}$ is preferably a fluoroalkyl group, more preferably a fluoroalkyl group having from 1 to 3 carbon atoms, still more preferably a fluoromethyl group, a difluoromethyl group, a trifluoromethyl group, a 2,2,2-trifluoroethyl group, a 1,1,2,2-tetrafluoroethyl group, a perfluoroethyl group, a 2,2,3,3-tetrafluoropropyl group, or a perfluoropropyl group, and particularly preferably a 2,2,2-trifluoroethyl group.

Specific examples of the hydrocarbon group having from 1 to 6 carbon atoms which is represented by $R^{F22}$ in Formula (F2) are the same as the specific examples of the hydrocarbon group having from 1 to 6 carbon atoms which is represented by any of $R^{F12}$ to $R^{F14}$ in Formula (F1).

In Formula (F2), the hydrocarbon group having from 1 to 6 carbon atoms which is represented by $R^{F22}$ is preferably an alkyl group having from 1 to 6 carbon atoms, more preferably an alkyl group having from 1 to 3 carbon atoms, still more preferably a methyl group or an ethyl group, particularly preferably a methyl group.

In Formula (F2), $R^{F22}$ is preferably a hydrocarbon group having from 1 to 6 carbon atoms.

The compound represented by Formula (F2) is preferably 2,2,2-trifluoroethyl methyl carbonate (abbreviated as "MFEC"), bis(2,2,2-trifluoroethyl)carbonate, perfluoroethyl methyl carbonate, or bis(perfluoroethyl)carbonate, and particularly preferably 2,2,2-trifluoroethyl methyl carbonate.

-Compound Represented by Formula (F3)-

Specific examples of the fluorinated hydrocarbon group having from 1 to 6 carbon atoms which is represented by any of $R^{F31}$ or $R^{F32}$ in Formula (F3) are the same as the specific examples of the fluorinated hydrocarbon group having from 1 to 6 carbon atoms which is represented by any of $R^{F11}$ to $R^{F14}$ in Formula (F1).

In Formula (F3), the fluorinated hydrocarbon group having from 1 to 6 carbon atoms which is represented by $R^{F31}$ and $R^{F32}$ is preferably a fluoroalkyl group, more preferably a fluoroalkyl group having from 1 to 3 carbon atoms, still more preferably a fluoromethyl group, a difluoromethyl group, a trifluoromethyl group, a 2,2,2-trifluoroethyl group, a 1,1,2,2-tetrafluoroethyl group, a perfluoroethyl group, a 2,2,3,3-tetrafluoropropyl group, or a perfluoropropyl group, and particularly preferably a 1,1,2,2-tetrafluoroethyl group or a 2,2,3,3-tetrafluoropropyl group.

Specific examples of the hydrocarbon group having from 1 to 6 carbon atoms which is represented by $R^{F32}$ in Formula (F3) are the same as the specific examples of the hydrocarbon group having from 1 to 6 carbon atoms which is represented by any of $R^{F12}$ to $R^{F14}$ in Formula (F1).

In Formula (F3), the hydrocarbon group having from 1 to 6 carbon atoms which is represented by $R^{F32}$ is preferably an alkyl group having from 1 to 6 carbon atoms, more preferably an alkyl group having from 1 to 3 carbon atoms, still more preferably a methyl group or an ethyl group, and particularly preferably a methyl group.

In Formula (F3), $R^{F31}$ and $R^{F32}$ are optionally bound to each other to form a ring, in which case the compound represented by Formula (F3) is a fluorine-containing cyclic ether compound. The ring in the fluorine-containing cyclic ether compound is preferably a 5-membered to 8-membered ring.

In Formula (F3), $R^{F32}$ is preferably a fluorinated hydrocarbon group having from 1 to 6 carbon atoms.

As a compound represented by Formula (F3), 1,1,2,2-tetrafluoroethyl-2,2,3,3-tetrafluoropropyl ether (abbreviated as "TFETFPE) is particularly preferable.

From the standpoint of further curbing an increase in the battery resistance during storage, the specific fluorine-containing compound preferably includes at least one selected from the group consisting of a compound represented by Formula (F2) and a compound represented by Formula (F3).

From the standpoint of further curbing an increase in the battery resistance during storage, it is also preferable that the specific fluorine-containing compound includes at least one selected from the group consisting of compounds represented by Formula (F3).

(Other Nonaqueous Solvent)

The nonaqueous solvent in the nonaqueous electrolytic solution of the second aspect may include at least one compound other than the specific fluorine-containing compound (hereinafter also referred to as "another nonaqueous solvent").

The proportion of the specific fluorine-containing compound to the nonaqueous solvent is preferably 40% by mass or lower, and more preferably 35% by mass or lower.

The proportion of the specific fluorine-containing compound to the nonaqueous solvent is preferably 1% by

mass or higher, more preferably 10% by mass or higher, still more preferably higher than 20% by mass, and further more preferably 25% by mass or higher.

The proportion of the specific fluorine-containing compound to the nonaqueous solvent is preferably from 1% by mass to 40% by mass, more preferably from 10% by mass to 40% by mass, still more preferably from more than 20% by mass to 40% by mass, and particularly preferably from 25% by mass to 35% by mass.

Various known nonaqueous solvents can be appropriately selected as other nonaqueous solvents, and it is preferable to use at least one of a cyclic aprotic solvent or a chain aprotic solvent.

When an increase in the flash point of the solvent is desired in order to improve the battery safety, it is preferable to use a cyclic aprotic solvent as another nonaqueous solvent.

From the standpoints of, for example, improving the battery load characteristics and improving the battery low-temperature characteristics, it is more preferable to use both of a cyclic aprotic solvent and a chain aprotic solventas as other nonaqueous solvents.

-Cyclic Aprotic Solvent-

Examples of cyclic aprotic solvents that can be used include a cyclic carbonate (excluding a fluorine-containing cyclic carbonate; the same shall apply hereinafter), a cyclic carboxylic acid ester, a cyclic sulfone, and a cyclic ether.

The cyclic aprotic solvent is particularly preferably a cyclic carbonate from the standpoint of the electrochemical stability of the nonaqueous electrolytic solution.

The cyclic aprotic solvent may be used singly, or two or more cyclic aprotic solvents may be used in mixture.

The proportion of the cyclic aprotic solvent to the nonaqueous solvent is preferably from 10% by mass to lower than 80% by mass, more preferably from 10% by mass to 70% by mass, still more preferably from 10% by mass to 50% by mass, and further more preferably from 20% by mass to 40% by mass. By regulating the proportion of the cyclic aprotic solvent within the above-mentioned range, the conductivity of the electrolytic solution, which relates to the battery charge-discharge characteristics, can be increased.

Specific examples of the cyclic carbonate include ethylene carbonate (abbreviated as "EC"), propylene carbonate, 1,2-butylene carbonate, 2,3-butylene carbonate, 1,2-pentylene carbonate, and 2,3-pentylene carbonate. Among them, ethylene carbonate or propylene carbonate, which has a high dielectric constant, is preferable, and ethylene carbonate is more preferable.

It is also possible to use two or more cyclic carbonates in mixture.

Specific examples of the cyclic carboxylic acid ester include $\gamma$-butyrolactone, $\delta$-valerolactone, and alkyl-substituted products thereof, such as methyl-$\gamma$-butyrolactone, ethyl-$\gamma$-butyrolactone, and ethyl-$\delta$-valerolactone.

The cyclic carboxylic acid ester has a low vapor pressure, a low viscosity and a high dielectric constant, thereby allowing the viscosity of the electrolytic solution to be reduced without lowering the flash point of the electrolytic solution and the dissociation degree of the electrolyte. Accordingly, the cyclic carboxylic acid ester has a feature such that the cyclic carboxylic acid ester can increase the conductivity of the electrolytic solution, which is an index related to the battery discharge characteristics, without increasing the flammability of the electrolytic solution. Therefore, when it is desired to increase the flash point of the solvent, it is preferable to use a cyclic carboxylic acid ester as the cyclic aprotic solvent. $\gamma$-butyrolactone is most preferable.

Examples of the cyclic sulfone include sulfolane, 2-methyl sulfolane, 3-methyl sulfolane, dimethyl sulfone, diethyl sulfone, dipropyl sulfone, methyl ethyl sulfone, and methyl propyl sulfone.

Examples of the cyclic ether include dioxolane.

-Chain Aprotic Solvent-

As the chain aprotic solvent, substances such as a chain carbonate (excluding a fluorine-containing chain carbonate; the same shall apply hereinafter), a chain carboxylic acid ester, a chain ether, or a chain phosphoric acid ester can be used.

As the chain aprotic solvent, a chain carbonate is particularly preferable from the standpoint of the electrochemical stability of the electrolytic solution.

The chain aprotic solvent may be used singly, or two or more chain aprotic solvents may be used in mixture.

The proportion of the chain aprotic solvent to the nonaqueous solvent is from 10% by mass to lower than 80% by mass, preferably from 10% by mass to 70% by mass, more preferably from 20% by mass to 60% by mass, and still more preferably from 30% by mass to 50% by mass.

Specific examples of the chain carbonate include dimethyl carbonate, methyl ethyl carbonate (abbreviated as "EMC"), diethyl carbonate, methyl propyl carbonate, methyl isopropyl carbonate, ethyl propyl carbonate, dipropyl carbonate, methyl butyl carbonate, ethyl butyl carbonate, dibutyl carbonate, methyl pentyl carbonate, ethyl pentyl carbonate, dipentyl carbonate, methyl heptyl carbonate, ethyl heptyl carbonate, diheptyl carbonate, methyl hexyl carbonate, ethyl

hexyl carbonate, dihexyl carbonate, methyl octyl carbonate, ethyl octyl carbonate, dioctyl carbonate, and methyl trifluoroethyl carbonate. It is also possible to use two or more chain carbonates in mixture.

Specific examples of the chain carboxylic acid ester include methyl pivalate. Specific examples of the chain ether include dimethoxyethane.

Specific examples of the chain phosphoric acid ester include trimethyl phosphate.

-Preferable Combinations-

As described above, it is preferable to use a combination of a cyclic aprotic solvent and a chain aprotic solvent as another nonaqueous solvent.

Among the above-described combinations, it is particularly preferable to use a combination of a cyclic carbonate and a chain carbonate.

Specific examples of the combination of a cyclic carbonate and a chain carbonate include: a combinations of ethylene carbonate and dimethyl carbonate; a combinations of ethylene carbonate and methyl ethyl carbonate; a combinations of ethylene carbonate and diethyl carbonate; a combinations of propylene carbonate and dimethyl carbonate; a combinations of propylene carbonate and methyl ethyl carbonate; a combinations of propylene carbonate and diethyl carbonate; a combinations of ethylene carbonate, propylene carbonate and methyl ethyl carbonate; a combinations of ethylene carbonate, propylene carbonate and diethyl carbonate; a combinations of ethylene carbonate, dimethyl carbonate and methyl ethyl carbonate; a combinations of ethylene carbonate, dimethyl carbonate and diethyl carbonate; a combinations of ethylene carbonate, methyl ethyl carbonate and diethyl carbonate; a combinations of ethylene carbonate. dimethyl carbonate, methyl ethyl carbonate and diethyl carbonate; a combinations of ethylene carbonate, propylene carbonate, dimethyl carbonate and methyl ethyl carbonate; a combinations of ethylene carbonate, propylene carbonate, dimethyl carbonate and diethyl carbonate; a combinations of ethylene carbonate, propylene carbonate, methyl ethyl carbonate and diethyl carbonate; a combinations of and ethylene carbonate, propylene carbonate, dimethyl carbonate, methyl ethyl carbonate and diethyl carbonate.

Examples of another nonaqueous solvent also include compounds other than those described above.

Specific examples of such other compounds include: amides, such as dimethylformamide; chain carbamates, such as methyl-*N,N*-dimethyl carbamate; cyclic amides, such as *N*-methylpyrrolidone; cyclic ureas, such as *N,N*-dimethylimidazolidinone; boron compounds, such as trimethyl borate, triethyl borate, tributyl borate, trioctyl borate, and trimethylsilyl borate; and polyethylene glycol derivatives represented by the following formulae:

$HO(CH_2CH_2O)_aH$,
$HO[CH_2CH(CH_3)O]_bH$,
$CH_3O(CH_2CH_2O)_cH$,
$CH_3O[CH_2CH(CH_3)O]_dH$,
$CH_3O(CH_2CH_2O)_eCH_3$,
$CH_3O[CH_2CH(CH_3)O]_fCH_3$,
$C_9H_{19}PhO(CH_2CH_2O)_g[CH(CH_3)O]_hCH_3$ (wherein, Ph represents a phenyl group), and
$CH_3O[CH_2CH(CH_3)O]_iCO[OCH(CH_3)CH_2]_jOCH_3$.

In the above formulae, a to f each represent an integer from 5 to 250; g to j each represent an integer from 2 to 249; $5 \leq g + h \leq 250$; and $5 \leq i + j \leq 250$.

<Additives>

The nonaqueous electrolytic solution of the second aspect may include at least one additive.

Examples of additives that can be contained in the nonaqueous electrolytic solution of the second aspect include the additive A contained in the nonaqueous electrolytic solution of the first aspect, and the additives described above as "other additives" in the description of the nonaqueous electrolytic solution of the first aspect.

[Lithium Secondary Battery of Second Aspect]

The lithium secondary battery of the second aspect according to the present disclosure includes: a positive electrode containing an aluminum (Al)-containing positive electrode current collector; a negative electrode; and the nonaqueous electrolytic solution of the second aspect.

The lithium secondary battery of the second aspect is the same as the lithium secondary battery of the first aspect, except that the nonaqueous electrolytic solution of the first aspect has been replaced by the nonaqueous electrolytic solution of the second aspect.

Therefore, with respect to the lithium secondary battery of the second aspect, the explanation of the nonaqueous electrolytic solution of the second aspect can be referenced, except that the expression "nonaqueous electrolytic solution of the first aspect" should be considered to be replaced by "nonaqueous electrolytic solution of the second aspect".

As described above, FIG. 1 and FIG. 2 are also a schematic perspective view and a schematic cross-sectional view, respectively, which illustrate one example of a laminate battery that is an example of the lithium secondary battery of the second aspect, and FIG. 3 is also a schematic cross-sectional view which illustrates one example of a coin battery that is another example of the lithium secondary battery of the second aspect.

EXAMPLES

Examples according to the present disclosure are described below. However, the present disclosure is not limited by the below-described Examples.

The term "addition amount" as used in the following means a content relative to the total amount of a finally obtained nonaqueous electrolytic solution, and "wt%" means "% by mass".

Examples and Comparative Examples for the first aspect are described below.

[Example 1A]

<Preparation of Nonaqueous Electrolytic Solution>

In a mixture obtained by mixing ethylene carbonate (EC), dimethyl carbonate (DMC) and methyl ethyl carbonate (EMC) in a ratio of 30:35:35 (mass ratio) as a nonaqueous solvent, LiTFSI (lithium bis(trifluoromethylsulfonyl)imide), which is a compound represented by Formula (1), was dissolved as an electrolyte such that the concentration of LiTFSI in a nonaqueous electrolytic solution that would be finally obtained would be 0.6 mol/L, and $LiPF_6$ as another electrolyte was also dissolved therein such that the concentration of $LiPF_6$ in the nonaqueous electrolytic solution that would be finally obtained would be 0.6 mol/L.

To the the resultant solution, methanesulfonyl fluoride (MSF), which is an example of a compound represented by Formula (A1), was added as an additive such that the content of MSF with respect to the total amount of the nonaqueous electrolytic solution would be 1.0% by mass, whereby the nonaqueous electrolytic solution was obtained.

In the nonaqueous electrolytic solution obtained, the molar ratio [Compound represented by Formula (1)/(Compound represented by Formula (1) + $LiPF_6$)] was 0.5.

<Cyclic Voltammetry (CV) (Evaluation of Al Corrosion)>

In the nonaqueous electrolytic solution obtained above (1.5 mL), an Al electrode as a working electrode, a Li electrode as a counter electrode, and a Li electrode as a reference electrode were immersed, and cyclic voltammetry (CV) was performed.

As the Al electrode (working electrode), an Al foil piece having a size of 15 mm in length and 4 mm in width, which was cut out from a 20 μm-thick strip-form aluminum foil (positive electrode current collector) for use in the below-described production of a coin battery, was used. The immersion depth of the Al electrode in the nonaqueous electrolytic solution (in other words, the length of the immersed part) was set to 7.5 mm.

CV was performed in three cycles, each of the cycles including operations of increasing the potential from 2.4 V to 5 V and then lowering the potential back to 2.4 V. The sweep rate of the potential was set to 10 mV/min.

Corrosion of the Al electrode was evaluated based on the oxidation current value observed in the CV. The smaller the observed oxidation current value is, the stronger the inhibition of oxidation reaction is, and the greater the reduction of the corrosion of the Al electrode is.

FIG. 4 shows a cyclic voltammogram of the second cycle of the CV

<Production of Coin Battery>

Using the nonaqueous electrolytic solution prepared above, a coin lithium secondary battery (hereinafter, also referred to as "coin battery") having the configuration illustrated in FIG. 3 was produced according to the following procedures.

(Preparation of Negative Electrode)

Amorphous-coated natural graphite-based graphite (97 parts by mass), carboxymethyl cellulose (1 part by mass) and an SBR latex (2 parts by mass) were kneaded in water solvent to prepare a paste-form negative electrode

mixture slurry.

Next, this negative electrode mixture slurry was applied to a negative electrode current collector made of a 10 μm-thick strip-form copper foil, and dried, and thereafter compressed using a roll press, to obtain a sheet-shaped negative electrode composed of the negative electrode current collector and a negative electrode active material layer. The coating density of the negative electrode active material layer was 10 mg/cm$^2$, and the packing density of the negative electrode active material layer was 1.5 g/ml.

(Preparation of Positive Electrode)

$LiNi_{0.5}Mn_{0.3}Co_{0.2}O_2$ (90 parts by mass), acetylene black (5 parts by mass) and polyvinylidene fluoride (5 parts by mass) were kneaded using *N*-methylpyrrolidinone as a solvent, to prepare a paste-form positive electrode mixture slurry.

Next, the positive electrode mixture slurry was applied to a positive electrode current collector made of a 20 μm-thick strip-form aluminum foil, and dried, and thereafter compressed using a roll press, to obtain a sheet-shaped positive electrode composed of the positive electrode current collector and a positive electrode active material layer. The coating density of the positive electrode active material layer was 30 mg/cm$^2$, and the packing density of the positive electrode active material layer was 2.5 g/ml.

(Production of Coin Battery)

The negative electrode and the positive electrode prepared above were stamped out in disc shapes having a diameter of 14 mm and 13 mm, respectively, to obtain a coin-shaped negative electrode and a coin-shaped positive electrode. In addition, a 20 μm-thick microporous polyethylene film was stamped out in a disc shape having a diameter of 17 mm, to obtain a separator.

The coin-shaped negative electrode, the separator and the coin-shaped positive electrode obtained were disposed in this order in layers inside a stainless-steel battery can (size 2032), and 20 μL of the nonaqueous electrolytic solution prepared above was filled into the stainless-steel battery can, thereby impregnating the separator, the positive electrode and the negative electrode with the nonaqueous electrolytic solution.

Next, an aluminum plate (thickness: 1.2 mm, diameter: 16 mm) and a spring were placed on the positive electrode, and the battery was tightly sealed by battery can lid seaming with a polypropylene gasket.

In this manner, a coin battery (specifically, a coin lithium secondary battery) having the configuration illustrated in FIG. 3 and having a diameter of 20 mm and a height of 3.2 mm was obtained.

<Evaluation of Resistance of Battery>

The coin battery obtained was evaluated with respect to resistance of the battery.

The term "conditioning" as used below refers to a process of repeatedly charging and discharging the coin battery between 2.75 V and 4.2 V three times in a thermostatic chamber at 25°C.

The term "high-temperature storage" as used below means an operation of storing the coin battery in a thermostatic chamber at 80°C for 48 hours.

(Measurement of Battery Resistance (DCIR) Before High-Temperature Storage)

The coin battery that had been subjected to conditioning was adjusted to have a state of charge (SOC) of 80% and, subsequently, the direct current internal resistance (DCIR, direct-current resistance) of the coin battery before high-temperature storage was measured at 25°C according to the following method.

The coin battery that had been adjusted to have an SOC of 80% was subjected to CC10s discharging at a discharge rate of 0.2 C.

Here, the term "CC10s discharging" means performing discharging at a constant current for 10 seconds.

The direct-current resistance was obtained based on the current value (specifically, a current value corresponding to a discharge rate of 0.2 C) and the reduction in voltage (= voltage before the initiation of discharging - voltage when 10 seconds have elapsed from the initiation of discharging) in the "CC10s discharging at a discharge rate of 0.2 C". The obtained direct-current resistance (Ω) was defined as the battery resistance (Ω) of the coin battery before high-temperature storage.

The results are shown in Table 1.

(Measurement of Battery Resistance (DCIR) After High-Temperature Storage)

The battery resistance (Ω) after high-temperature storage was measured in the same manner as that in the above-described measurement of the battery resistance before high-temperature storage, except that the coin battery that had been subjected to conditioning but had not been adjusted to an SOC of 80% was additionally subjected to CC-CV charging up to 4.25 V at a charge rate of 0.2 C in a thermostat chamber at 25°C, and then to high-temperature storage.
The results are shown in Table 1.
Here, the term "CC-CV charging" means constant current - constant voltage.
(Measurement of Increase Ratio of Battery Resistance During High-Temperature Storage)
The increase ratio of the battery resistance during high-temperature storage was calculated using the following equation. The results are shown in Table 1.

$$\text{Increase ratio of battery resistance during high-temperature storage (\%)} = [(\text{Battery resistance } (\Omega) \text{ after high-temperature storage} - \text{Battery resistance } (\Omega) \text{ before high-temperature storage})/\text{Battery resistance } (\Omega) \text{ before high-temperature storage}] \times 100$$

[Example 2A]

The same operations as those in Example 1A were performed, except that MSF used as an additive in the nonaqueous electrolytic solution was replaced by the same mass of lithium difluorophosphate (LiDFP).
The results are shown in FIG. 4 and Table 1.
LiDFP (lithium difluorophosphate) is a specific example of a compound represented by Formula (A3).

[Comparative Example 1A]

The same operations as those in Example 1A were performed, except that MSF was not included in the nonaqueous electrolytic solution.
The results are shown in FIG. 4 and Table 1.

[Example 101A]

The same operations as in Example 1A were performed, except that LiTFSI used as an electrolyte in the nonaqueous electrolytic solution was replaced by the same mole of lithium bis(fluorosulfonyl)imide (LiFSI), and that MSF used as an additive in the nonaqueous electrolytic solution was replaced by the same mass of perfluorohexyl ethylene (PFHE).
The results thereof are shown in FIG. 5 and Table 1.

[Example 102A]

The same operations as those in Example 101A were performed, except that PFHE used as an additive in the nonaqueous electrolytic solution was replaced by the same mass of MSF.
The results are shown in FIG. 5 and Table 1.

[Comparative Example 101A]

The same operations as those in Example 101A were performed, except that PFHE was not included in the nonaqueous electrolytic solution.
The results are shown in FIG. 5 and Table 1.
FIG. 4 shows cyclic voltammograms of the second cycle of the CV performed in Example 1A (LiTFSI + MSF), Example 2A (LiTFSI + LiDFP), and Comparative Example 1A (LiTFSI, without additives).
As shown in FIG. 4, in Examples 1A and 2A, the oxidation current value ("Current ($mA/cm^2$)" in FIG. 4) was reduced, in other words, corrosion of the Al electrode was reduced, as compared to Comparative Example 1A.
FIG. 5 shows cyclic voltammograms of the second cycle of the CV performed in Example 101A (LiFSI + PFHE), Example 102A (LiFSI + MSF), and Comparative Example 101A (LiFSI, without additives).
As shown in FIG. 5, in Example 101A and Example 102A, the oxidation current value ("Current ($mA/cm^2$)" in FIG. 5) was reduced, in other words, corrosion of the Al electrode was reduced, as compared to Comparative Example 101A.

Table 1

| | Electrolyte in nonaqueous electrolytic solution | | | | Additive A in nonaqueous electrolytic solution | | Battery resistance | | |
|---|---|---|---|---|---|---|---|---|---|
| | Compound represented by Formula (1) | | Other | | Type | Addition amount (wt%) | before high -temperature storage (Ω) | after high -temperature straoge (Ω) | Increase ratio during high-temperature storage (%) |
| | Type | Concentration (mol/L) | Type | Concentration (mol/L) | | | | | |
| Comparative Example 1A | LiTFSI | 0.6 | $LiPF_6$ | 0.6 | none | - | 17 | 35 | 106 |
| Example 1A | LiTFSI | 0.6 | $LiPF_6$ | 0.6 | MSF | 1.0 | 20 | 39 | 95 |
| Example 2A | LiTFSI | 0.6 | $LiPF_6$ | 0.6 | LiDFP | 1.0 | 17 | 32 | 88 |
| Comparative Example 101A | LiFSI | 0.6 | $LiPF_6$ | 0.6 | none | - | 19 | 53 | 179 |
| Example 101A | LiFSI | 0.6 | $LiPF_6$ | 0.6 | PFHE | 1.0 | 16 | 42 | 163 |
| Example 102A | LiFSI | 0.6 | $LiPF_6$ | 0.6 | MSF | 1.0 | 18 | 34 | 89 |

As shown in Table 1, in Example 1A and Example 2A, an increase in the battery resistance during high-temperature storage was reduced, as compared to Comparative Example 1A. Similarly, in Example 101A and Example 102A, an increase in the battery resistance during high-temperature storage was reduced, as compared to Comparative Example 101A.
It is conceivable that the reason that an increase in the battery resistance during high-temperature storage was reduced in Example 1A, Example 2A, Example 101A and Example 102A is that corrosion of the Al-containing positive electrode current collector was reduced by the addition of the additives.

[Example 201A, Example 202A, and Comparative Example 201A]

The same operations as those in Example 1A, Example 2A and Comparative Example 1A, respectively, were performed, except that the concentration of the compound represented by Formula (1) and the concentration of $LiPF_6$ were changed as shown in Table 2.
The results are shown in Table 2.
In the nonaqueous electrolytic solutions in these examples, the molar ratio [Compound represented by Formula (1)/(Compound represented by Formula (1) + $LiPF_6$)] was 0.17.

[Example 301A, Example 302A, and Comparative Example 301A]

The same operations as those in Example 101A, Example 102A and Comparative Example 101A, respectively, were performed, except that the concentration of the compound represented by Formula (1) and the concentration of $LiPF_6$ were changed as shown in Table 2.
The results are shown in Table 2.
In the nonaqueous electrolytic solutions in these examples, the molar ratio [Compound represented by Formula (1)/(Compound represented by Formula (1) + $LiPF_6$)] was 0.17.

Table 2

| | Electrolyte in nonaqueous electrolytic solution | | | | Additive A in nonaqueous electrolytic solution | | Battery resistance | | |
|---|---|---|---|---|---|---|---|---|---|
| | Compound represented by Formula (1) | | Other | | Type | Addition amount (wt%) | before high -temperature storage (Ω) | after high -temperature storage (Ω) | Increase ratio during high -temperature storage (%) |
| | Type | Concentration (mol/L) | Type | Concentration (mol/L) | | | | | |
| Comparative Example 201A | LiTFSI | 0.2 | $LiPF_6$ | 1.0 | none | - | 19 | 37 | 96 |
| Example 201A | LiTFSI | 0.2 | $LiPF_6$ | 1.0 | MSF | 1.0 | 17 | 30 | 78 |
| Example 202A | LiTFSI | 0.2 | $LiPF_6$ | 1.0 | LiDFP | 1.0 | 19 | 37 | 91 |
| Comparative Example 301A | LiFSI | 0.2 | $LiPF_6$ | 1.0 | none | - | 17 | 31 | 83 |
| Example 301A | LiFSI | 0.2 | $LiPF_6$ | 1.0 | PFHE | 1.0 | 17 | 28 | 67 |
| Example 302A | LiFSI | 0.2 | $LiPF_6$ | 1.0 | MSF | 1.0 | 17 | 30 | 81 |

As shown in Table 2, an effect similar to that observed in Examples (in Table 1) in which the concentration of the compound represented by Formula (1) was 0.6 mol/L was also confirmed in Examples where the concentration of the compound represented by Formula (1) was 0.2 mol/L.

Examples and Comparative Examples for the second aspect are described below.

[Example 1B]

<Preparation of Nonaqueous Electrolytic Solution>

A nonaqueous solvent was prepared by mixing ethylene carbonate (EC), methyl ethyl carbonate (EMC) and 4-fluoroethylene carbonate (FEC) in a mass ratio [EC:EMC:FEC] of 30:40:30. 4-fluoroethylene carbonate (FEC) is a specific example of a fluorine-containing carbonate compound (specifically, a compound represented by Formula (F1)).

In the the nonaqueous solvent obtained, lithium bis(trifluoromethylsulfonyl)imide (LiTFSI), which is a compound represented by Formula (1), was dissolved as an electrolyte such that the concentration of LiTFSI in a nonaqueous electrolytic solution that would be finally obtained would be 0.6 mol/L, and $LiPF_6$ as another electrolyte was also dissolved therein such that the concentration thereof in the nonaqueous electrolytic solution that would be finally obtained would be 0.6 mol/L, whereby a nonaqueous electrolytic solution was obtained.

In the obtained nonaqueous electrolytic solution, the molar ratio [Compound represented by Formula (1)/(Compound represented by Formula (1) + $LiPF_6$)] was 0.5.

<Production of Coin Battery>

Using the above-prepared nonaqueous electrolytic solution, a coin lithium secondary battery (hereinafter also referred to as a "coin battery") having the configuration illustrated in FIG. 3 was produced according to the following procedures.

(Preparation of Negative Electrode)

Amorphous-coated natural graphite-based graphite (97 parts by mass), carboxymethyl cellulose (1 part by mass) and an SBR latex (2 parts by mass) were kneaded in water solvent to prepare a paste-form negative electrode mixture slurry.

Next, this negative electrode mixture slurry was applied to a negative electrode current collector made of a 10 μm-thick strip-form copper foil, and dried, and thereafter compressed using a roll press, to obtain a sheet-shaped negative electrode composed of the negative electrode current collector and a negative electrode active material layer. The coating density of the negative electrode active material layer was 10 $mg/cm^2$, and the packing density of the negative electrode active material layer was 1.5 g/ml.

(Preparation of Positive Electrode)

$LiNi_{0.5}Mn_{0.3}Co_{0.2}$ (5 parts by mass) and polyvinylidene fluoride (5 parts by mass) were kneaded using *N*-methylpyrrolidinone as a solvent, to prepare a paste-form positive electrode mixture slurry.

Next, this positive electrode mixture slurry was applied to a positive electrode current collector made of a 20 μm-thick strip-form aluminum foil, and dried, and thereafter compressed using a roll press, to obtain a sheet-shaped positive electrode composed of the positive electrode current collector and a positive electrode active material layer. The coating density of the positive electrode active material layer was 30 $mg/cm^2$, and the packing density of the positive electrode active material layer was 2.5 g/ml.

(Production of Coin Battery)

The negative electrode and the positive electrode prepared above were stamped out in disc shapes having a diameter of 14 mm and 13 mm, respectively, to obtain a coin-shaped negative electrode and a coin-shaped positive electrode. In addition, a 20 μm-thick microporous polyethylene film was stamped out in a disc shape having a diameter of 17 mm, to obtain a separator.

The coin-shaped negative electrode, the separator and the coin-shaped positive electrode obtained were disposed in this order in layers inside a stainless-steel battery can (size 2032), and 20 μL of the nonaqueous electrolytic solution prepared above was filled into the stainless-steel battery can, thereby impregnating the separator, the positive electrode and the negative electrode with the nonaqueous electrolytic solution.

Next, an aluminum plate (thickness: 1.2 mm, diameter: 16 mm) and a spring were placed on the positive

electrode, and the battery was tightly sealed by battery can lid seaming with a polypropylene gasket.

In this manner, a coin battery (specifically, a coin lithium secondary battery) having the configuration illustrated in FIG. 3 and having a diameter of 20 mm and a height of 3.2 mm was obtained.

<Evaluation of Battery>

The following evaluations were performed on the coin battery obtained.

The term "conditioning" as used below refers to a process of repeatedly charging and discharging the coin battery between 2.75 V and 4.2 V three times in a thermostatic chamber at 25°C.

The term "high-temperature storage" as used below means an operation of storing the coin battery in a thermostatic chamber at 80°C for 48 hours.

(Discharge Capacity)

The coin battery obtained was subjected to conditioning.

The coin battery after conditioning was subjected to CC-CV charging up to 4.25 V at a charge rate of 0.2 C in a thermostat chamber at 25°C, and thereafter the discharge capacity (0.2 C) was measured at 25°C and a discharge rate of 0.2 C.

The results are shown in Table 3.

Here, the term "CC-CV charging" means constant-current constant-voltage.

(Measurement of Battery Resistance (DCIR) Before High-Temperature Storage)

The above-obtained coin battery was subjected to conditioning.

The coin battery after conditioning was adjusted to have an SOC (abbreviation of State of Charge) of 80% and, subsequently, the direct-current resistance (direct current internal resistance; DCIR) of the coin battery before high-temperature storage was measured at -20°C according to the following method.

The coin battery that had been adjusted to have an SOC of 80% was subjected to CC10s discharging at a discharge rate of 0.2 C.

Here, the term "CC10s discharging" means performing discharging at a constant current for 10 seconds.

The direct-current resistance was obtained based on the current value (specifically, a current value corresponding to a discharge rate of 0.2 C) and the reduction in voltage (= voltage before the initiation of discharging - voltage when 10 seconds have elapsed from the initiation of discharging) in the "CC10s discharging at a discharge rate of 0.2 C". The obtained direct-current resistance (Ω) was defined as the battery resistance (Ω) of the coin battery before high-temperature storage.

The results are shown in Table 3.

(Measurement of Battery Resistance (DCIR) After High-Temperature Storage)

The battery resistance (Ω) after high-temperature storage was measured in the same manner as that in the above-described measurement of the battery resistance before high-temperature storage, except that the coin battery that had been subjected to conditioning but had not been adjusted to an SOC of 80% was additionally subjeted to CC-CV charging up to 4.25 V at a charging rate of 0.2 C in a thermostat chamber at 25°C, and then to high-temperature storage.

The results are shown in Table 3.

(Measurement of Increase Ratio of Battery Resistance During High-Temperature Storage)

The increase ratio of the battery resistance during high-temperature storage was calculated using the following equation. The results are shown in Table 3.

Increase ratio of battery resistance during high-temperature storage (%) = [(Battery resistance (Ω) after high-temperature storage - Battery resistance (Ω) before high-temperature storage)/Battery resistance (Ω) before high-temperature storage] × 100

[Example 2B, Example 3B, and Comparative Example 1B]

The same operations as those in Example 1B were performed, except that the mixing ratio for the nonaqueous solvent was changed as shown in Table 3.

The results are shown in Table 3.

In Table 3, "MFEC" means 2,2,2-trifluoroethylmethyl carbonate, which is a specific example of a compound represented by Formula (F2).
In Table 3, "TFPTFPE" means 1,1,2,2-tetrafluoroethyl-2,2,3,3-tetrafluoropropyl ether, which is a specific example of a compound represented by Formula (F3).

[Examples 101B to 103B and Comparative Example 101B]

The same operations as those in Examples 1B to 3B and Comparative Example 1B, respectively, were performed, except that LiTFSI used as an electrolyte in the nonaqueous electrolytic solution was replaced by the same mole of lithium bis(fluorosulfonyl)imide (LiFSI).
The results are shown in Table 3.

Table 3

| | Electrolyte in nonaqueous electrolytic solution | | | | Nonaqueous solvent in nonaqueous electrolytic solution | Battery evaluation | | | |
|---|---|---|---|---|---|---|---|---|---|
| | Compound represented by Formula (1) | | Other electrolyte | | Type and mixing ratio (mass ratio) | Discharge capacity (mAh) | Battery resistance (DCIR) | | |
| | Type | Concentration (mol/L) | Type | Concentration (mol/L) | | | before high-temperature storage (Ω) | after high-temperature storage (Ω) | Increase ratio during high-temperature storage (%) |
| Comparative Example 1B | LiTFSI | 0.6 | $LiPF_6$ | 0.6 | EC/EMC = 30/70 | 4.73 | 173 | 456 | 164 |
| Example 1B | LiTFSI | 0.6 | $LiPF_6$ | 0.6 | EC/EMC/FEC = 30/40/30 | 4.86 | 264 | 634 | 140 |
| Example 2B | LiTFSI | 0.6 | $LiPF_6$ | 0.6 | EC/EMC/MFEC = 30/40/30 | 4.80 | 157 | 294 | 87 |
| Example 3B | LiTFSI | 0.6 | $LiPF_6$ | 0.6 | EC/EMC/TFETFPE = 30/40/30 | 4.79 | 198 | 315 | 59 |
| Comparative Example 101B | LiFSI | 0.6 | $LiPF_6$ | 0.6 | EC/EMC = 30/70 | 4.83 | 135 | 534 | 296 |
| Example 101B | LiFSI | 0.6 | $LiPF_6$ | 0.6 | EC/EMC/FEC = 30/40/30 | 4.86 | 221 | 629 | 185 |
| Example 102B | LiFSI | 0.6 | $LiPF_6$ | 0.6 | EC/EMC/MFEC = 30/40/30 | 4.87 | 178 | 396 | 122 |
| Example 103B | LiFSI | 0.6 | $LiPF_6$ | 0.6 | EC/EMC/TFETFPE = 30/40/30 | 4.86 | 151 | 350 | 132 |

As shown in Table 3, in Examples 1B to 3B, an increase in the battery resistance during high-temperature storage was reduced as compared to Comparative Example 1B. In addition, in Examples 1B to 3B, the discharge capacity was also improved as compared to Comparative Example 1B.

Similarly, in Examples 101B to 103B, an increase in the battery resistance during high-temperature storage was reduced as compared to Comparative Example 101B. In addition, in Examples 101B to 103B, the discharge capacity was also improved as compared to Comparative Example 101B.

It is conceivable that one of the reasons that an effect in terms of curbing an increase in the battery resistance during high-temperature storage was obtained in Examples 1B to 3B and 101B to 103B is that corrosion of the Al-containing positive electrode current collector was reduced by the specific fluorine-containing compound (FEC, MFEC, or TFETFPE) contained in the nonaqueous solvent.

In order to verify this point, Al corrosion was evaluated by cyclic voltammetry (CV).

[Cyclic Voltammetry (CV) (Evaluation of Al Corrosion)]

Each of the nonaqueous electrolytic solutions of Examples 1B to 3B and 101B as well as Comparative Examples 1B and 101B was evaluated with respect to Al corrosion, using cyclic voltammetry (CV) as described below.

Specifically, in the nonaqueous electrolytic solution (1.5 mL) of each example, an Al electrode as a working electrode, a Li electrode as a counter electrode, and a Li electrode as a reference electrode were immersed, and cyclic voltammetry (CV) was performed.

As the Al electrode (working electrode), an Al foil piece having a size of 15 mm in length and 4 mm in width, which was cut out from a 20 μm-thick strip-form aluminum foil (positive electrode current collector) for use in the above-described production of a coin battery, was used. The immersion depth of the Al electrode in the nonaqueous electrolytic solution (in other words, the length of the part immersed in the nonaqueous electrolytic solution) was set to 7.5 mm.

CV was performed in three cycles, each of the cycles including operations of increasing the potential from 3 V to 5 V and then lowering the potential back to 3 V The sweep rate of the potential was set to 10 mV/min.

Corrosion of the Al electrode was evaluated based on the oxidation current value observed in the CV The smaller the observed oxidation current value is, the stronger the inhibition of oxidation reaction is, and the greater the reduction of the corrosion of the Al electrode is.

FIG. 6 shows cyclic voltammograms of the second cycle of the cyclic voltammetry performed for the nonaqueous electrolytic solutions of Examples 1B to 3B and Comparative Example 1B.

As shown in FIG. 6, in the case of the nonaqueous electrolytic solutions of Examples 1B to 3B, the oxidation current value ("Current (mA/$cm^2$)" in FIG. 6) was reduced as compared to the case of the nonaqueous electrolytic solution of Comparative Example 1B. This result confirms that the corrosion of an Al electrode can actually be reduced when using the nonaqueous electrolytic solutions of Examples 1B to 3B.

FIG. 7 shows cyclic voltammograms of the second cycle of the cyclic voltammetry performed for the nonaqueous electrolytic solutions of Example 101B and Comparative Example 101B.

As shown in FIG. 7, in the case of the nonaqueous electrolytic solution of Example 101B, the oxidation current value ("Current (mA/$cm^2$)" in FIG. 7) was reduced as compared to the case of the nonaqueous electrolytic solution of Comparative Example 101B. This result confirms that the corrosion of an Al electrode can actually be reduced when using the nonaqueous electrolytic solution of Examples 101B.

[Example 201B, Example 202B, and Comparative Example 201B]

The same operations as those in Example 101B, Example 102B and Comparative Example 101B, respectively, were performed, except that the concentration of the compound represented by Formula (1) and the concentration of $LiPF_6$ were changed as shown in Table 4.

The results are shown in Table 4.

In the nonaqueous electrolytic solutions in these examples, the molar ratio [Compound represented by Formula (1)/(Compound represented by Formula (1) + $LiPF_6$)] was 0.17.

Table 4

| | Electrolyte in nonaqueous electrolytic solution | | | | Nonaqueous solvent in nonaqueous electrolytic solution | Battery evaluation | | | |
|---|---|---|---|---|---|---|---|---|---|
| | Compound represented by Formula (1) | | Other electrolyte | | Type and mixing ratio (mass ratio) | Discharge capacity (mAh) | Battery resistance (DCIR) | | |
| | Type | Concentration (mol/L) | Type | Concentration (mol/L) | | | before high-temperature storage (Ω) | after high-temperature storage (Ω) | Increase ratio during high-temperature storage (%) |
| Comparative Example 201B | LiFSI | 0.2 | $LiPF_6$ | 1.0 | EC/EMC = 30/70 | 4.77 | 163 | 648 | 297 |
| Example 201B | LiFSI | 0.2 | $LiPF_6$ | 1.0 | EC/EMC/FEC = 30/40/30 | 4.78 | 199 | 583 | 193 |
| Example 202B | LiFSI | 0.2 | $LiPF_6$ | 1.0 | EC/EMC/MFEC = 30/40/30 | 4.78 | 145 | 353 | 143 |

As shown in Table 4, an effect similar to that observed in Examples (in Table 3) in which the concentration of the compound represented by Formula (1) was 0.6 mol/L was also confirmed in Examples where the concentration of the compound represented by Formula (1) was 0.2 mol/L.

The disclosure of Japanese Patent Application No. 2018-010350, filed January 25, 2018, and the disclosure of Japanese Patent Application No. 2018-010351, filed January 25, 2018, are incorporated herein by reference in their entirety.

All publications, patent applications, and technical standards mentioned in this specification are herein incorporated by reference to the same extent as if each individual publication, patent application, or technical standard was specifically and individually indicated to be incorporated by reference.

## Claims

1. A nonaqueous electrolytic solution for a battery, for use in a battery including an aluminum-containing positive electrode current collector, the nonaqueous electrolytic solution comprising:

   an electrolyte that includes a compound represented by the following Formula (1); and
   an additive A that is a fluorine-containing compound other than compounds represented by Formula (1),
   a concentration of the compound represented by Formula (1) being from 0.1 mol/L to 2.0 mol/L:

   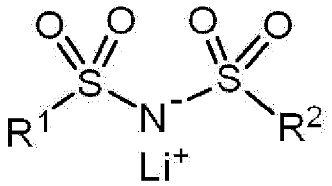

   (1)

   wherein, in Formula (1), each of $R^1$ and $R^2$ independently represents a fluorine atom, a trifluoromethyl group, or a pentafluoroethyl group.

2. The nonaqueous electrolytic solution for a battery according to claim 1, wherein, in Formula (1), each of $R^1$ and $R^2$ independently represents a fluorine atom or a trifluoromethyl group.

3. The nonaqueous electrolytic solution for a battery according to claim 1 or 2, wherein the electrolyte further includes $LiPF_6$, and a ratio of a number of moles of the compound represented by Formula (1) with respect to a total of the number of moles of the compound represented by Formula (1) and a number of moles of $LiPF_6$ is from 0.08 to 0.9.

4. The nonaqueous electrolytic solution for a battery according to claim 3, wherein the ratio of the number of moles of the compound represented by Formula (1) with respect to the total of the number of moles of the compound represented by Formula (1) and the number of moles of $LiPF_6$ is from 0.1 to 0.9.

5. The nonaqueous electrolytic solution for a battery according to any one of claims 1 to 4, wherein the additive A includes at least one selected from the group consisting of a compound represented by the following Formula (A1), a compound represented by the following Formula (A2), and a compound represented by the following Formula (A3):

   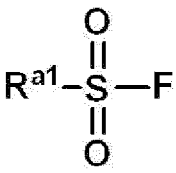 (A1) 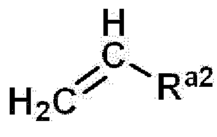 (A2) 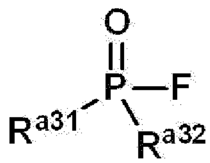 (A3)

   wherein, in Formula (A1), $R^{a1}$ represents a hydrocarbon group having from 1 to 6 carbon atoms, a hydrocarbon group having from 1 to 6 carbon atoms which is substituted with at least one fluorine atom, a hydrocarbonoxy group having from 1 to 6 carbon atoms, a hydrocarbonoxy group having from 1 to 6 carbon atoms which is substituted with at least one fluorine atom, a fluorine atom, or an -OLi group;
   in Formula (A2), $R^{a2}$ represents a hydrocarbon group having from 1 to 12 carbon atoms which is substituted with at least one fluorine atom; and

in Formula (A3), one of $R^{a31}$ or $R^{a32}$ represents a fluorine atom or an -OLi group, and another of $R^{a31}$ or $R^{a32}$ represents an -OLi group.

**6.** The nonaqueous electrolytic solution for a battery according to claim 5, wherein $R^{a1}$ is a hydrocarbon group having from 1 to 6 carbon atoms, a hydrocarbon group having from 1 to 6 carbon atoms which is substituted with at least one fluorine atom, a hydrocarbonoxy group having from 1 to 6 carbon atoms, a hydrocarbonoxy group having from 1 to 6 carbon atoms which is substituted with at least one fluorine atom, or a fluorine atom.

**7.** The nonaqueous electrolytic solution for a battery according to claim 5 or 6, wherein the additive A includes at least one selected from the group consisting of a compound represented by Formula (A1) and a compound represented by Formula (A2).

**8.** The nonaqueous electrolytic solution for a battery according to claim 5 or 6, wherein the nonaqueous electrolytic solution contains:

a combination of the electrolyte and the additive A, wherein the electrolyte includes lithium bis(trifluoromethylsulfonyl)imide as the compound represented by Formula (1), and the additive A includes at least one selected from the group consisting of a compound represented by Formula (A1) and a compound represented by Formula (A3), or
a combination of the electrolyte and the additive A, wherein the electrolyte includes lithium bis(fluorosulfonyl)imide as the compound represented by Formula (1), and the additive A includes at least one selected from the group consisting of a compound represented by Formula (A1) and a compound represented by Formula (A2).

**9.** The nonaqueous electrolytic solution for a battery according to any one of claims 1 to 8, wherein a content of the additive A is from 0.1% by mass to 10% by mass with respect to a total amount of the nonaqueous electrolytic solution for a battery.

**10.** The nonaqueous electrolytic solution for a battery according to claim 9, wherein the content of the additive A is from 0.2% by mass to 10% by mass with respect to the total amount of the nonaqueous electrolytic solution for a battery.

**11.** A nonaqueous electrolytic solution for a battery, for use in a battery including an aluminum-containing positive electrode current collector, the nonaqueous electrolytic solution comprising:

an electrolyte that includes a compound represented by the following Formula (1); and
a nonaqueous solvent including at least one fluorine-containing compound selected from the group consisting of a fluorine-containing carbonate compound and a fluorine-containing ether compound,
a concentration of the compound represented by Formula (1) being from 0.1 mol/L to 2.0 mol/L:

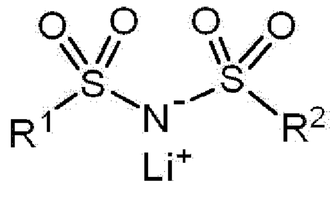 (1)

wherein, in Formula (1), each of $R^1$ and $R^2$ independently represents a fluorine atom, a trifluoromethyl group, or a pentafluoroethyl group.

**12.** The nonaqueous electrolytic solution for a battery according to claim 11, wherein, in Formula (1), each of $R^1$ and $R^2$ independently represents a fluorine atom or a trifluoromethyl group.

**13.** The nonaqueous electrolytic solution for a battery according to claim 11 or 12,
wherein the electrolyte further includes $LiPF_6$, and a ratio of a number of moles of the compound represented by Formula (1) with respect to a total of the number of moles of the compound represented by Formula (1) and a number of moles of $LiPF_6$ is from more than 0.1 to 0.9.

**14.** The nonaqueous electrolytic solution for a battery according to any one of claims 11 to 13, wherein the fluorine-containing compound includes at least one selected from the group consisting of a compound represented by the

following Formula (F1), a compound represented by the following Formula (F2), and a compound represented by the following Formula (F3):

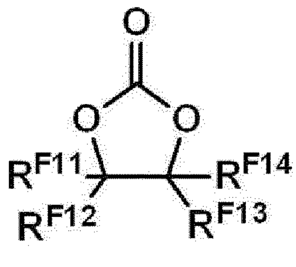

(F1)

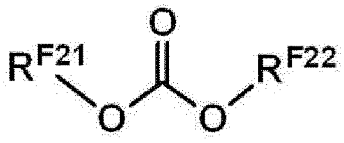

(F2)

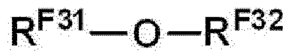

(F3)

wherein, in Formula (F1), $R^{F11}$ represents a fluorine atom or a fluorinated hydrocarbon group having from 1 to 6 carbon atoms, and each of $R^{F12}$ to $R^{F14}$ independently represents a hydrogen atom, a fluorine atom, a hydrocarbon group having from 1 to 6 carbon atoms, or a fluorinated hydrocarbon group having from 1 to 6 carbon atoms;
in Formula (F2), $R^{F21}$ represents a fluorinated hydrocarbon group having from 1 to 6 carbon atoms, and $R^{F22}$ represents a hydrocarbon group having from 1 to 6 carbon atoms, or a fluorinated hydrocarbon group having from 1 to 6 carbon atoms; and
in Formula (F3), $R^{F31}$ represents a fluorinated hydrocarbon group having from 1 to 6 carbon atoms, $R^{F32}$ represents a hydrocarbon group having from 1 to 6 carbon atoms, or a fluorinated hydrocarbon group having from 1 to 6 carbon atoms, and $R^{F31}$ and $R^{F32}$ are optionally bound to each other to form a ring.

**15.** The nonaqueous electrolytic solution for a battery according to claim 14, wherein the fluorine-containing compound includes at least one selected from the group consisting of a compound represented by Formula (F2) and a compound represented by Formula (F3).

**16.** The nonaqueous electrolytic solution for a battery according to claim 14, wherein the fluorine-containing compound includes at least one selected from the group consisting of compounds represented by Formula (F3).

**17.** The nonaqueous electrolytic solution for a battery according to any one of claims 11 to 16, wherein a proportion of the fluorine-containing compound to the nonaqueous solvent is 40% by mass or lower.

**18.** The nonaqueous electrolytic solution for a battery according to any one of claims 11 to 17, wherein the proportion of the fluorine-containing compound to the nonaqueous solvent is 10% by mass or higher.

**19.** The nonaqueous electrolytic solution for a battery according to claim 18, wherein the proportion of the fluorine-containing compound to the nonaqueous solvent is higher than 20% by mass.

**20.** A lithium secondary battery, comprising:

a positive electrode that includes an aluminum-containing positive electrode current collector;
a negative electrode that includes, as a negative electrode active material, at least one selected from the group consisting of metallic lithium, a lithium-containing alloy, a metal or alloy capable of being alloyed with lithium, an oxide capable of doping and dedoping of lithium ions, a transition metal nitride capable of doping and dedoping of lithium ions, and a carbon material capable of doping and dedoping of lithium ions; and
the nonaqueous electrolytic solution for a battery according to any one of claims 1 to 19.

**21.** A lithium secondary battery obtained by charging and discharging the lithium secondary battery according to claim 20.

FIG.1

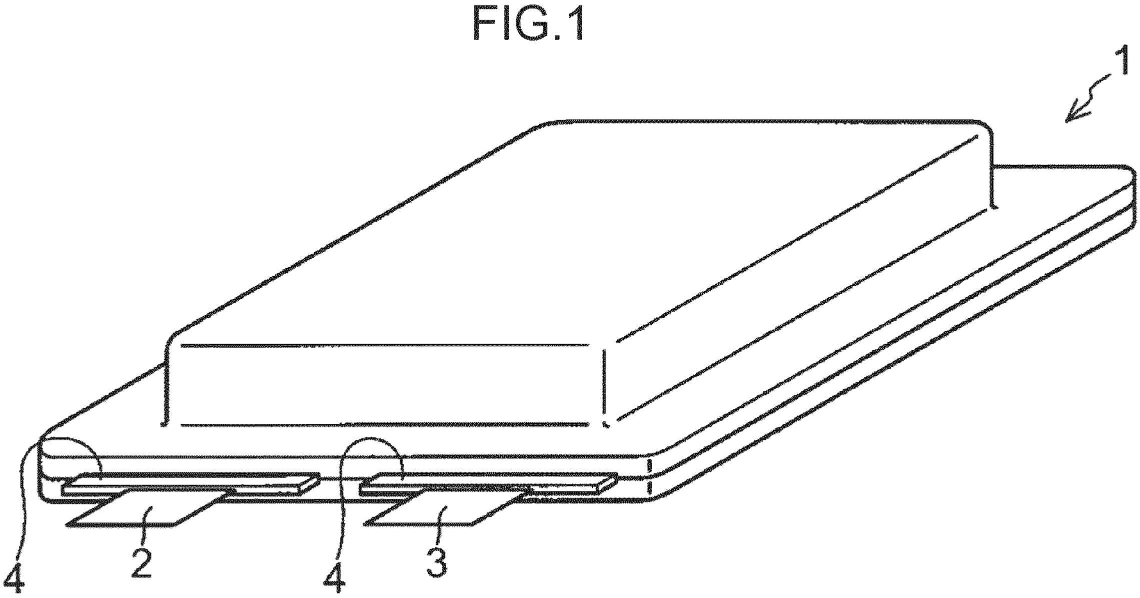


FIG.2

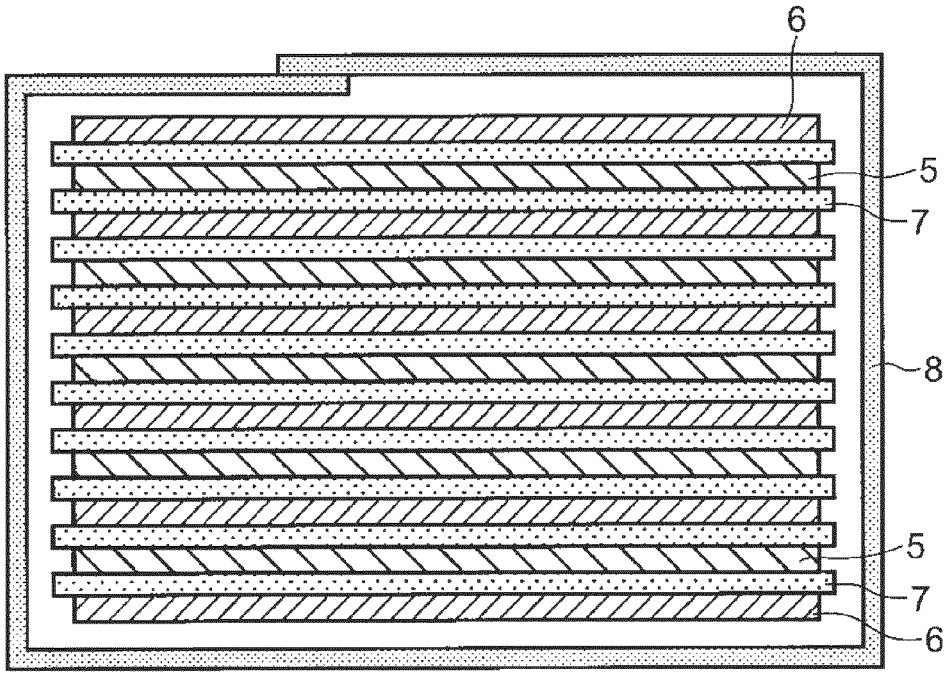

FIG.3

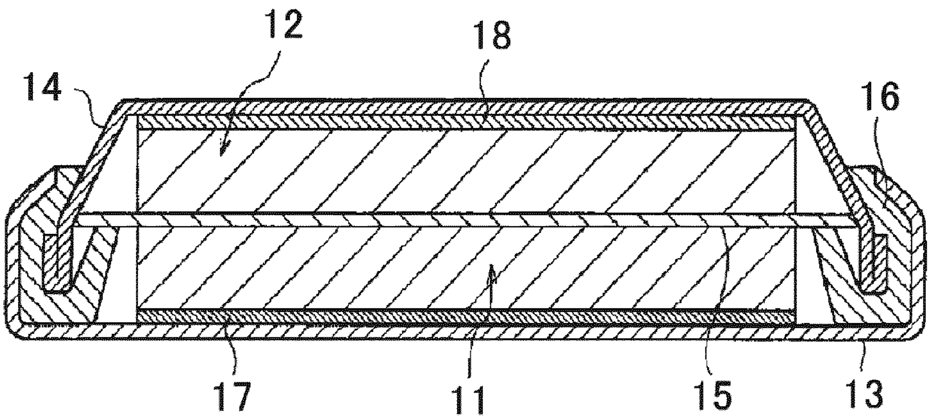
12
18
14
16
17
11
15
13

FIG.4

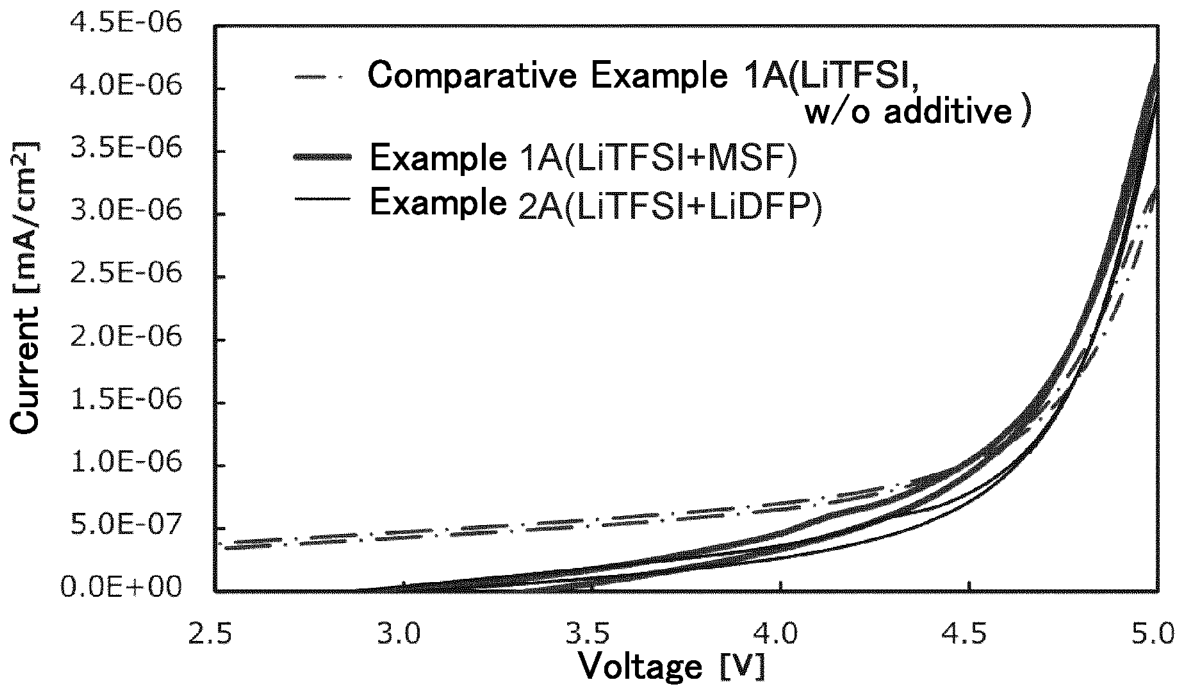
4.5E-06
4.0E-06
3.5E-06
3.0E-06
2.5E-06
2.0E-06
1.5E-06
1.0E-06
5.0E-07
0.0E+00
Current [mA/cm²]
Comparative Example 1A(LiTFSI, w/o additive)
Example 1A(LiTFSI+MSF)
Example 2A(LiTFSI+LiDFP)
2.5
3.0
3.5
4.0
4.5
5.0
Voltage [V]

FIG.5

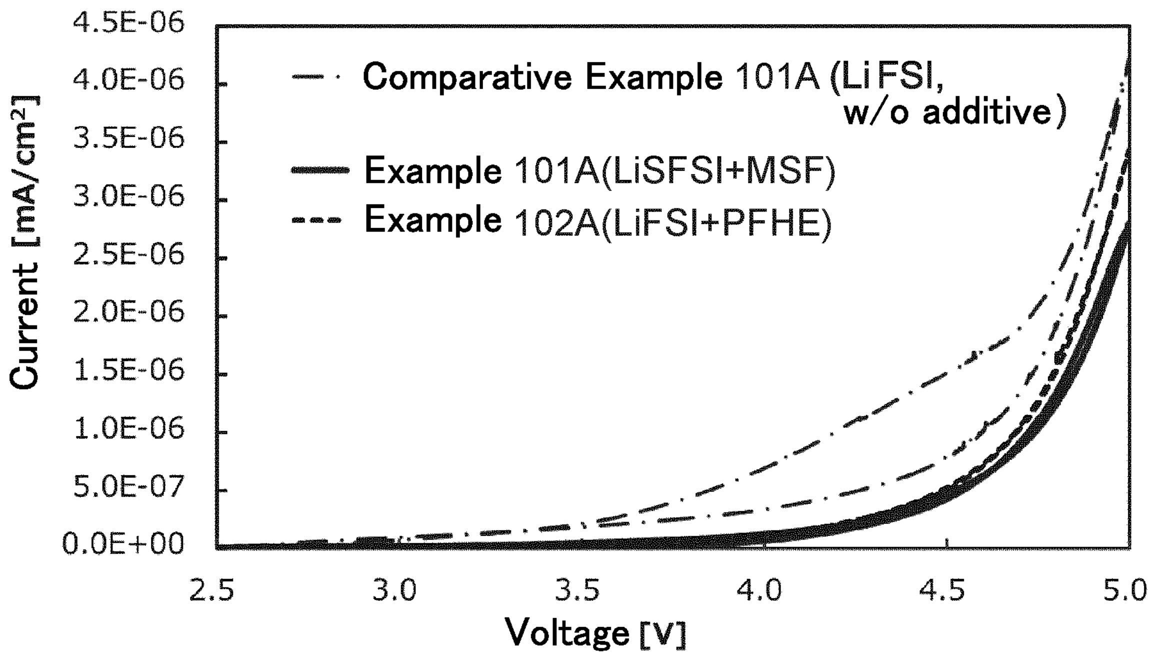
4.5E-06
4.0E-06
3.5E-06
3.0E-06
2.5E-06
2.0E-06
1.5E-06
1.0E-06
5.0E-07
0.0E+00
Current [mA/cm²]
Comparative Example 101A (Li FSI, w/o additive)
Example 101A(LiSFSI+MSF)
Example 102A(LiFSI+PFHE)
2.5
3.0
3.5
4.0
4.5
5.0
Voltage [V]

FIG.6

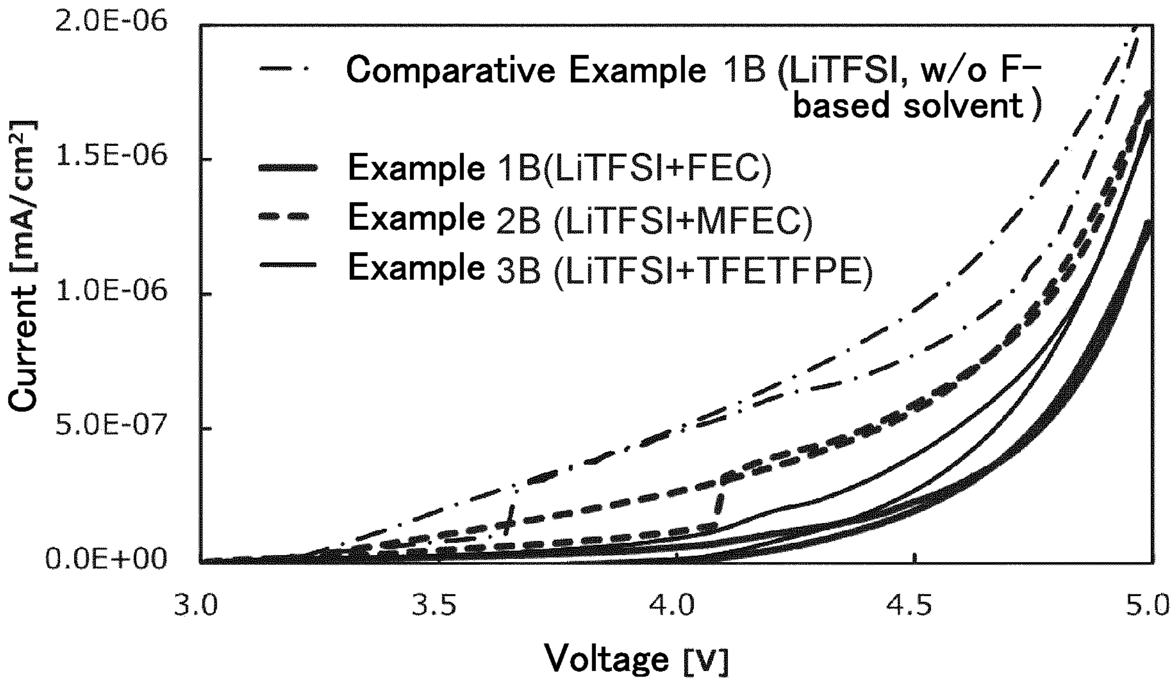
2.0E-06
1.5E-06
1.0E-06
5.0E-07
0.0E+00
Current [mA/cm²]
Comparative Example 1B (LiTFSI, w/o F-based solvent)
Example 1B(LiTFSI+FEC)
Example 2B (LiTFSI+MFEC)
Example 3B (LiTFSI+TFETFPE)
3.0
3.5
4.0
4.5
5.0
Voltage [V]

FIG.7

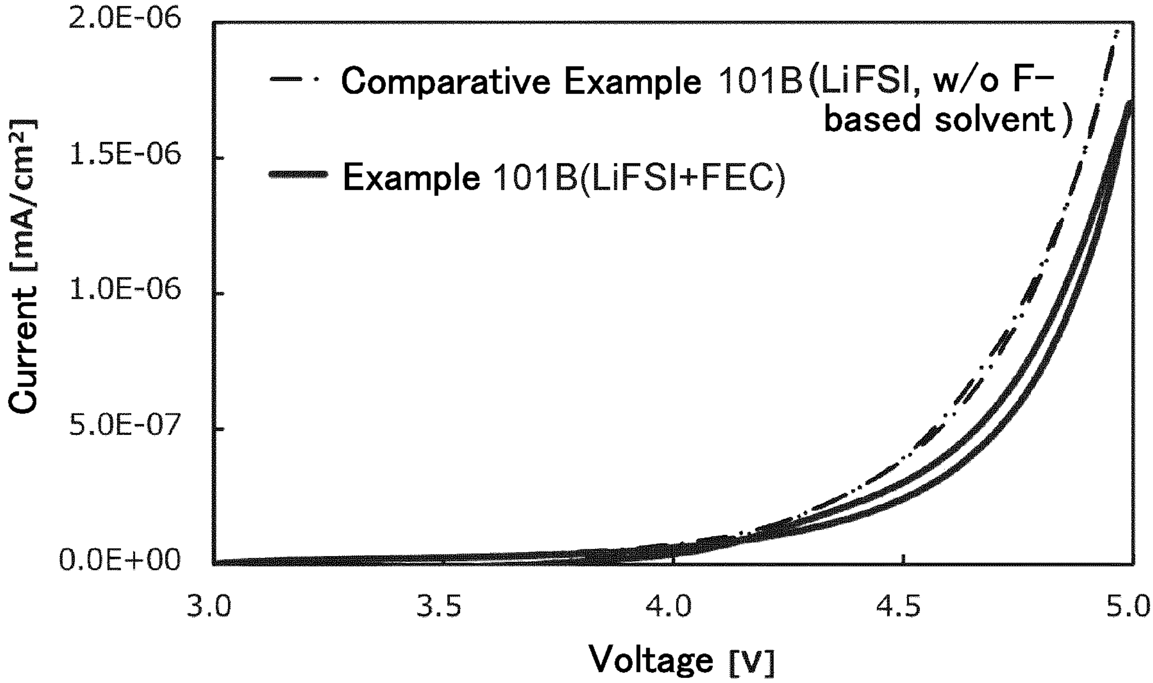
Comparative Example 101B(LiFSI, w/o F-based solvent)
Example 101B(LiFSI+FEC)
Current [mA/cm²]
2.0E-06
1.5E-06
1.0E-06
5.0E-07
0.0E+00
3.0
3.5
4.0
4.5
5.0
Voltage [V]

## INTERNATIONAL SEARCH REPORT

International application No. PCT/JP2019/002374

A. CLASSIFICATION OF SUBJECT MATTER
Int.Cl. H01M10/0567(2010.01)i, H01M10/052(2010.01)i, H01M10/0568(2010.01)i

According to International Patent Classification (IPC) or to both national classification and IPC

B. FIELDS SEARCHED

Minimum documentation searched (classification system followed by classification symbols)
Int.Cl. H01M10/0567, H01M10/052, H01M10/0568

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | WO 2017/217408 A1 (NEC CORPORATION) 21 December 2017, claims, paragraphs [0030]-[0032], examples (Family: none) | 1-5, 9, 10, 20, 21 |
| X | WO 2016/09994 A1 (UBE INDUSTRIES, LTD.) 21 January 2016, claims, paragraphs [0017]-[0025], examples & US 2017/0222268 A1, claims, paragraphs [0030]-[0050], examples & EP 3171445 A1 & CN 106471664 A & KR 10-2017-0031693 A | 1-5, 8-10, 20, 21 |

☒ Further documents are listed in the continuation of Box C.  ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 25.02.2019 | 05.03.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2019/002374

C (Continuation). DOCUMENTS CONSIDERED TO BE RELEVANT

| Category* | Citation of document, with indication, where appropriate, of the relevant passages | Relevant to claim No. |
|---|---|---|
| X | JP 2017-532740 A (LG CHEMICAL LTD.) 02 November 2017, claims, paragraphs [0016]-[0018], [0025]-[0029], examples & US 2016/0329601 A1, claims, paragraphs [0016]-[0019], [0027]-[0030], examples & WO 2016/048104 A1 & EP 3076473 A1 & KR 10-2016-0037101 A & CN 105934848 A | 1-4, 9-21 |
| X | JP 2015-153525 A (LG CHEMICAL LTD.) 24 August 2015, claims, paragraphs [0011]-[0024], examples (Family: none) | 1-4, 9-21 |
| X | JP 2014-203748 A (NIPPON SHOKUBAI CO., LTD.) 27 October 2014, claims, paragraphs [0011]-[0032], examples (Family: none) | 1-4, 9-15, 17-21 |
| X | JP 2016-532237 A (SOLVAY FLUOR GMBH) 13 October 2016, claims, paragraphs [0004], [0008]-[0058], examples & US 2016/0118690 A1, claims, paragraphs [0004], [0007]-[0060], examples & WO 2014/177702 A1 & EP 2800197 A1 | 1-4, 9-15, 17-21 |
| A | JP 2006-49152 A (MITSUBISHI CHEMICAL CORPORATION) 16 February 2006 & US 2007/0224514 A1 & WO 2005/114773 A1 & EP 1744394 A1 & CN 101609911 A | 1-11, 20, 21 |
| A | JP 2004-172101 A (MITSUI CHEMICALS, INC.) 17 June 2004 & KR 10-2004-0038679 A & CN 1499662 A | 1-11, 20, 21 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013016456 A
- JP 2006294375 A
- JP 2010129449 A
- JP 2018010350 A
- JP 2018010351 A